# EUROPEAN PATENT APPLICATION

(11) **EP 4 576 678 A1**
(43) Date of publication of application: **25.06.2025**
(21) Application number: 23861995.1
(22) Date of filing: 28.06.2023
(51) Int. Cl.: H04L 12/28

(54) **ACCESS METHOD, APPARATUS AND SYSTEM FOR CLIENT DEVICE**

(30) Priority: 07.09.2022 CN 202211091872; 03.11.2022 CN 202211368457
(71) Applicant: Huawei Technologies Co., Ltd., Shenzhen, Guangdong 518129 (CN)
(72) Inventor: HUA, Rongrong, Shenzhen, Guangdong 518129 (CN); WANG, Yuehua, Shenzhen, Guangdong 518129 (CN); ZENG, Yi, Shenzhen, Guangdong 518129 (CN)
(74) Representative: Thun, Clemens
(86) International application number: PCT/CN2023/103078
(87) International publication number: WO 2024/051294

(57) **Abstract**

This application provides a client device access method, an apparatus, and a system, and pertains to the field of communication technologies. In the solution provided in this application, after a CP device is faulty, if receiving a dial-up request sent by a client device, a UP device can enable the client device to a network based on an address segment delivered by the CP device before the CP device is faulty. In this way, it is ensured that the client device can still normally access the network after the CP device is faulty.

## Description

This application claims priorities to Chinese Patent Application No. 202211091872.4, filed on September 7, 2022 and entitled "CLIENT DEVICE ACCESS METHOD, APPARATUS, AND SYSTEM", and to Chinese Patent Application No. 202211368457.9, filed on November 3, 2022 and entitled "CLIENT DEVICE ACCESS METHOD, APPARATUS, AND SYSTEM", which are incorporated herein by reference in their entireties.

### TECHNICAL FIELD

This application relates to the field of communication technologies, and in particular, to a client device access method, an apparatus, and a system.

### BACKGROUND

A broadband remote access server (broadband remote access server, BRAS) is an access gateway oriented to broadband network applications, and therefore also referred to as a broadband network gateway (broadband network gateway, BNG). The BRAS is configured to provide a network access function for client devices (which may also be referred to as users).

In related technologies, a broadband access gateway may be implemented by using virtual BNG (virtual BNG, vBNG). In this implementation, the broadband access gateway is deployed in a control plane (control plane, CP) device and user plane (user plane, UP) device separation (CU separation) manner. A plurality of UP devices are deployed in a distributed manner, and each of the UP devices serves as a user plane of the BNG (or the vBNG), for forwarding of service packets based on a user entry delivered by a CP device. The CP device may be implemented by using a cloudification technology and deployed in a centralized manner. As a control plane of the BNG (or the vBNG), the CP device is configured to control and manage the client device and centrally manage the plurality of UP devices. For example, the CP device is mainly responsible for managing going online of the client device, configuration and user entry delivery, and the like.

However, when the CP device is faulty, new client devices cannot go online, that is, the new client devices cannot access a network.

### SUMMARY

This application provides a client device access method, an apparatus, and a system, to resolve a technical problem that a new client device cannot go online when a CP device is faulty.

According to a first aspect, a client device access method is provided, and is applied to a UP device in a CP-UP separation broadband access system. The method includes: receiving an address segment allocated by a CP device to the UP device, and after the CP device is faulty, if a dial-up request sent by a target client device is received, allocating a network address to the target client device from the address segment, for the target client device to access a network.

According to the solution provided in this application, after the CP device is faulty, the UP device can access a client device to the network by using the address segment delivered by the CP device before the CP device is faulty. In other words, the UP device can switch to an autonomous driving mode after the CP device is faulty. This ensures that the client device can still normally access the network after the CP device is faulty, and ensures reliability of the broadband access system.

Optionally, the method may further include: performing authentication and/or authorization on the target client device based on target domain information corresponding to the target client device. Authentication and/or authorization are/is performed on the target client device, so that security and reliability of accessing the network by the client device can be effectively ensured.

Optionally, the dial-up request includes the target domain information. In other words, the UP device may directly obtain, from the dial-up request of the target client device, the target domain information corresponding to the target client device. The target domain information may be a domain name.

Optionally, the method may further include: receiving a user entry of at least one client device that is delivered by the CP device before the CP device is faulty, where a user entry of each client device includes domain information of the client device.

In the solution provided in this application, the UP device may store, locally or in a database, the user entry delivered by the CP device. In addition, after any client device goes offline, the UP device does not delete a user entry of the client device. Therefore, it can be ensured that when the client device re-requests to go online, the UP device can perform authentication, authorization, and accounting on the client device by using information in the locally stored user entry.

Optionally, a process of performing authentication and/or authorization on the target client device based on target domain information corresponding to the target client device may include: if the target client device belongs to the at least one client device, sending a dial-up response to the target client device; and after receiving an access request that is sent by the target client device based on the dial-up response, performing authentication and/or authorization on the target client device based on the target domain information corresponding to the target client device.

If the target client device belongs to the at least one client device, that is, the UP device stores a user entry of the target client device, the UP device may determine that the UP device can perform authentication and/or authorization on the client device based on information in the user entry. Based on this, the UP device can immediately send the dial-up response to the target client device, to ensure that the target client device can preferentially go online from the UP device.

Optionally, a process of performing authentication and/or authorization on the target client device based on target domain information corresponding to the target client device may include: if the target client device does not belong to the at least one client device, sending a dial-up response to the target client device after a delay of target duration; and after receiving an access request that is sent by the target client device based on the dial-up response, performing authentication and/or authorization on the target client device based on the target domain information corresponding to the target client device.

If the target client device does not belong to the at least one client device, that is, the UP device stores no user entry of the target client device, the UP device may delay responding to the dial-up request of the target client device, to ensure that the target client device can preferentially go online from another UP device that stores the corresponding user entry. This can avoid performing authentication and accounting on the client device as much as possible.

Optionally, if the target client device belongs to the at least one client device, the target domain information may be domain information in a user entry of the target client device. In other words, the UP device may re-access the target client device based on a domain to which the target client device historically accesses.

Alternatively, if the target client device does not belong to the at least one client device, the target domain information may be default domain information stored in the UP device. In other words, if the target client device has not accessed the network from the UP device before, the UP device may access the target client device to a default domain.

Optionally, a process of performing authentication and/or authorization on the target client device based on domain information corresponding to the target client device may include: obtaining authentication information corresponding to the target domain information, and performing authentication and authorization on the target client device by using an authentication device indicated by the authentication information; or performing authorization on the target client device based on authorization information corresponding to the target domain information.

The authentication information may include an address of the authentication server, and may further include an address of an accounting server. The authorization information may include information such as QoS and/or an ACL. In addition, if the UP device obtains the authentication information corresponding to the target domain information, the UP device may perform authentication and authorization on the target client device based on the authentication information. If the UP device does not obtain the authentication information, or an authentication manner recorded in the user entry of the target client is none authentication, the UP device may perform authorization on the target client device based on the authorization information, that is, authentication does not need to be performed on the target client device. Correspondingly, accounting does not need to be performed on the target client device subsequently.

Optionally, before the performing authentication and/or authorization on the target client device based on domain information corresponding to the target client device, the method may further include: receiving the target domain information delivered by the CP device or statically configured and the authentication information that corresponds to the target domain information and that is used for authentication and authorization, and/or receiving the target domain information delivered by the CP device or statically configured and the authorization information that corresponds to the target domain information and that is used for authorization.

In the solution provided in this application, a correspondence between the domain information and the authentication information, and a correspondence between the domain information and the authorization information may be preconfigured in the UP device in different manners. This effectively improves flexibility.

Optionally, a process of performing authorization on the target client device may include: configuring a data transmission rate range and/or an access control rule of the target client device. The data transmission rate range may be a range less than the rate threshold, that is, the UP device may configure an upper limit rate (which may also be referred to as a maximum bandwidth) of the target client device. The access control rule is used to restrict access permission of the target client device. For example, the access control rule may be an ACL.

Optionally, the method may further include: after a fault of the CP device is rectified, receiving the user entry of the at least one client device that is delivered by the CP device ; or sending, to the CP device based on a synchronization indication sent by the CP device, a user entry of at least one client device that is stored in the UP device.

After the fault of the CP device is rectified, if the CP device stores the user entry, the user entry stored in the CP device may be synchronized to the UP device, to implement CU data synchronization. If the CP device does not store the user entry (that is, the user entry is lost), the UP device may reversely synchronize the user entry to the CP device based on the synchronization indication of the CP device, to ensure reliability of the CP device during working.

Optionally, a process of sending, to the CP device, a user entry of at least one client device that is stored in the UP device may include: sending, to the CP device, a user entry that is stored in the UP device and that is of at least one client device that meets a synchronization condition. The synchronization condition may include: The client device accesses the network before the CP device is faulty, and the client device is still in an online state.

It can be learned from the synchronization condition that, for a client device that is already offline, the UP device does not need to synchronize a user entry of the client device to the CP device, to improve efficiency of data synchronization. For a client device that accesses the network during a fault period of the CP device, because the client device may not be authenticated, a user entry of the client device may not need to be synchronized to the CP device, to ensure reliability of the data synchronization.

Optionally, the method may further include: before receiving the user entry of the at least one client device that is delivered by the CP device after the fault is rectified, sending, to the CP device, a user entry of at least one client device that accesses the network during a fault period of the CP device. Correspondingly, if detecting that any user entry sent by a first UP device is the same as a user entry of any client device stored in the CP device, the CP device deletes the user entry of the any client device stored in the CP device. Then, the CP device may send, to the first UP device, a user entry that is currently stored in the CP device and that is of at least one client device that goes online before the CP device is faulty.

It may be understood that the first UP device may first receive the user entry of the at least one client device that is delivered by the CP device after the fault is rectified, and then report, to the CP device, the user entry that is of the at least one client device that accesses the network during the fault period of the CP device. After comparing the user entries and deleting the user entry of the any client device stored in the CP device, the CP device may send a deletion notification to the first UP device. The first UP device may delete, based on the deletion notification, the user entry of the any client device that is previously delivered by the CP device.

Optionally, the method may further include: if the user entry of the at least one client device that is delivered by the CP device after the fault is rectified includes a user entry of a client device that goes online again, clearing the user entry of the client device that goes online again that is delivered by the CP device after the fault is rectified. The client device that goes online again is a client device that accesses the network before the CP device is faulty and that re-accesses the network via the UP device after the client device goes offline during the fault period of the CP device.

For the client device that is re-accessed to the network during the fault period of the CP device, a user entry of the client device can be subject to data locally stored in the UP device. Therefore, accuracy of user data stored in the UP device can be ensured.

It may be understood that, after receiving the synchronization indication, the UP device may also synchronize, to the CP device, both a user entry of a client device that goes online before the CP device is faulty and a user entry of a client device that goes online after the CP device is faulty.

Optionally, the method may further include: after the fault of the CP device is rectified, disconnecting the client device that accesses the network during the fault period of the CP device.

Because the client device that accesses the network during the fault period of the CP device may not be authenticated, the UP device may disconnect the client device after the fault of the CP device is rectified. In this way, the client device can be re-authenticated and access the network, to ensure reliability of accessing the network by the client device.

Optionally, the broadband access system may include a master CP device and a standby CP device. Correspondingly, a process of receiving an address segment allocated by the CP device to the UP device may include: receiving an address segment allocated by the master CP device to the UP device. After the CP device is faulty, if the dial-up request sent by the target client device is received, the allocating a network address to the target client device from the address segment may include: after both the master CP device and the standby CP device are faulty, if the dial-up request sent by the target client device is received, allocating the network address to the target client device from the address segment.

In other words, the UP device may switch to the autonomous driving mode after both the two CP devices are faulty, to process a going-online process of a new client device.

According to a second aspect, a client device access method is provided, and is applied to a CP device in a CP-UP separation broadband access system. The method includes: allocating an address segment to a first UP device. After the first UP device detects that the CP device is faulty, if a dial-up request sent by a target client device is received, the address segment is used by the first UP device to allocate a network address to the target client device from the address segment, for the target client device to access a network.

Optionally, the method may further include: delivering a user entry of at least one client device to the first UP device, where a user entry of each client device includes domain information of the client device. The user entry delivered by the CP device may be stored locally by the first UP device or in a database.

Optionally, the method may further include: delivering a correspondence between target domain information and authentication information to the first UP device, where the target domain information corresponds to the target client device; and/or delivering a correspondence between the target domain information and authorization information to the first UP device. The authentication information is used by the first UP device to perform authentication and authorization on the target client device by using an authentication device indicated by the authentication information, and the authorization information is used by the first UP device to perform authorization on the target client device.

Optionally, after a fault of the CP device is rectified, the method may further include: if the CP device stores a user entry of at least one client device, delivering, to the first UP device, the user entry of the at least one client device stored in the CP device, or if the CP device stores no user entry, sending a synchronization indication to the first UP device, and receiving a user entry of at least one client device that is sent by the first UP device based on the synchronization indication.

In other words, after the fault of the CP device is rectified, if the CP device stores the user entry, the CP device can synchronize data to the UP device. If the CP device does not store the user entry, the UP device can reversely synchronize data to the CP device.

Optionally, a process of receiving a user entry of at least one client device that is sent by the first UP device based on the synchronization indication may include: receiving a user entry of at least one client device that is sent by the first UP device based on the synchronization indication that meets a synchronization condition. The synchronization condition may include: The client device accesses the network before the CP device is faulty, and the client device is still in an online state.

Optionally, a process of receiving a user entry of at least one client device that is sent by the first UP device based on the synchronization indication may include: receiving a user entry of at least one client device that goes online before the CP device is faulty and a user entry of at least one client device that goes online during a fault period of the CP device that are sent by the first UP device based on the synchronization indication.

In addition, the method may further include: if a user entry of any client device that goes online during the fault period of the CP device is the same as a user entry of any client device that goes online before the CP device is faulty, deleting the user entry of the any client device that goes online before the CP device is faulty, and sending a deletion notification to the first UP device. The deletion notification indicates the first UP device to delete the user entry of the any client device that goes online before the CP device is faulty. That user entries are the same may mean that MAC addresses in the user entries are the same.

Based on the foregoing manner, the first UP device may synchronize all user entries stored in the first UP device to the CP device. The CP device may compare user entries used before the CP device is out of management with user entries of client devices that newly go online during an out-of-management period, and if same user entries exist, the CP device may delete the user entry used before the CP device is out of management. In other words, if a client device goes online before the CP device is out of management, goes offline after the CP device is out of management, and goes online again from the first UP device, a user entry obtained after the client device goes online again is used.

Optionally, if the CP device stores the user entry of the at least one client device, the delivering, to the first UP device, the user entry of the at least one client device stored in the CP device includes: receiving a user entry that is sent by the first UP device and that is of at least one client device that goes online during a fault period of the CP device; if any user entry sent by the first UP device is the same as a user entry of any client device stored in the CP device, deleting the user entry of the any client device stored in the CP device; and sending, to the first UP device, a user entry that is currently stored in the CP device and that is of at least one client device that goes online before the CP device is faulty.

It may be understood that after the fault of the CP device is rectified, the CP device may first deliver, to the first UP device, the user entry of the at least one client device that is stored in the CP device before the CP device is faulty, and then receive the user entry that is reported by the first UP device and that is of the at least one client device that accesses the network during the fault period of the CP device. Then, after comparing the user entries and deleting the user entry of the any client device stored in the CP device before the CP device is faulty, the CP device may send the deletion notification to the first UP device. The deletion notification indicates the first UP device to delete a user entry of any client device that is previously delivered by the CP device.

It can be learned from the foregoing synchronization manner that, if a client device goes online before the CP device is faulty, goes offline during the fault period of the CP device, and goes online again from the first UP device, both the CP device and the first UP device may use a user entry obtained after the client device goes online again.

Optionally, the method may further include: after duration in which a communication connection to the first UP device is disconnected reaches reserved duration, allocating the address segment to a second UP device.

Because the CP device can reserve an allocated address segment for specific duration and then reallocate the address segment to another UP device, a probability of a route conflict on a UP side may be effectively reduced.

Optionally, the CP device may be a master CP device in the broadband access system, and the broadband access system may further include a standby CP device. Correspondingly, after the first UP device detects that both the master CP device and the standby CP device are faulty, if the dial-up request sent by the target client device is received, the address segment allocated by the master CP device is used by the first UP device to allocate the network address to the target client device from the address segment, for the target client device to access the network.

According to a third aspect, a client device access method is provided, and is applied to a CP-UP separation broadband access system, where the system includes a CP device and a first UP device. The method includes: The CP device allocates an address segment to the first UP device; and after the CP device is faulty, if a dial-up request sent by a target client device is received, the first UP device allocates a network address to the target client device from the address segment, for the target client device to access a network.

Optionally, the method may further include: The first UP device performs authentication and/or authorization on the target client device based on target domain information corresponding to the target client device.

Optionally, the method may further include: The CP device delivers a user entry of at least one client device to the first UP device before the CP device is faulty, where a user entry of each client device includes domain information of the client device.

Optionally, the method may further include: The CP device delivers, to the first UP device, the target domain information and authentication information that corresponds to the target domain information and that is used for authentication and authorization, and/or the target domain information and authorization information that corresponds to the target domain information and that is used for authorization.

Optionally, after a fault of the CP device is rectified, the method may further include: If the CP device stores a user entry of at least one client device, the CP device delivers, to the first UP device, the user entry of the at least one client device stored in the CP device; or if the CP device stores no user entry, the CP device sends a synchronization indication to the first UP device, and the first UP device sends a user entry of at least one client device to the CP device based on the synchronization indication.

Optionally, the system further includes a second UP device, and the method may further include: After duration in which a communication connection to the first UP device is disconnected reaches reserved duration, the CP device allocates the address segment to the second UP device.

Optionally, the system includes a master CP device and a standby CP device. Correspondingly, a process in which the CP device allocates an address segment to the first UP device may include: The master CP device allocates the address segment to the first UP device. After the CP device is faulty, if the dial-up request sent by the target client device is received, that the first UP device allocates a network address to the target client device from the address segment may include: After both the master CP device and the standby CP device are faulty, if the dial-up request sent by the target client device is received, the first UP device allocates the network address to the target client device from the address segment.

According to a fourth aspect, a network device is provided. The network device may be a CP device or a UP device in a CU-separation broadband access system. The network device includes at least one module, and the at least one module may be configured to implement the client device access method provided in the first aspect or the second aspect.

According to a fifth aspect, a network device is provided. The network device may be a CP device or a UP device in a CU-separation broadband access system. The network device includes a memory, a processor, and a computer program that is stored in the memory and that may be run on the processor. When executing the computer program, the processor implements the client device access method provided in the first aspect or the second aspect.

According to a sixth aspect, a network device is provided. The network device may be a CP device or a UP device in a CU-separation broadband access system. The network device may include a main control board and an interface board. The main control board and the interface board may be configured to implement the client device access method provided in the first aspect or the second aspect.

According to a seventh aspect, a computer-readable storage medium is provided. The computer-readable storage medium stores instructions, and the instructions are executed by a processor to implement the client device access method provided in the first aspect or the second aspect.

According to an eighth aspect, a computer program product including instructions is provided. When the instructions are run on a processor, the processor performs the client device access method provided in the first aspect or the second aspect.

According to a ninth aspect, a client device access system is provided, and the system includes a UP device and a CP device. The UP device is configured to implement the client device access method provided in the first aspect, and the CP device is configured to implement the client device access method provided in the second aspect.

According to a tenth aspect, a chip is provided. The chip may be configured to implement the method provided in any aspect.

In conclusion, this application provides a client device access method, an apparatus, and a system. In the solution provided in this application, after a CP device is faulty, if receiving a dial-up request sent by a target client device, a UP device can access the target client device to a network based on an address segment delivered by the CP device before the CP device is faulty. In this way, it is ensured that the client device can still normally access the network after the CP device is faulty.

### BRIEF DESCRIPTION OF DRAWINGS

FIG. 1 is a diagram of evolution from a BNG to a vBNG according to an embodiment of this application;
FIG. 2 is a diagram of device forms of a CP device and a UP device according to an embodiment of this application;
FIG. 3 is a diagram of an application scenario of a broadband gateway access system according to an embodiment of this application;
FIG. 4 is a diagram of an architecture of a broadband access system according to an embodiment of this application;
FIG. 5 is a diagram of an architecture of another broadband access system according to an embodiment of this application;
FIG. 6 is a flowchart of a client device access method according to an embodiment of this application;
FIG. 7A and FIG. 7B are a flowchart of another client device access method according to an embodiment of this application;
FIG. 8 is a flowchart of a method for performing authentication and/or authorization on a target client device according to an embodiment of this application;
FIG. 9A and FIG. 9B are a flowchart of still another client device access method according to an embodiment of this application;
FIG. 10A and FIG. 10B are a flowchart of yet another client device access method according to an embodiment of this application;
FIG. 11 is a flowchart of still yet another client device access method according to an embodiment of this application;
FIG. 12 is a flowchart of a data processing method used after a fault of a CP device is rectified according to an embodiment of this application;
FIG. 13 is a diagram of a structure of a UP device according to an embodiment of this application;
FIG. 14 is a diagram of a structure of a CP device according to an embodiment of this application;
FIG. 15 is a diagram of a structure of a network device according to an embodiment of this application; and
FIG. 16 is a diagram of a structure of another network device according to an embodiment of this application.

### DESCRIPTION OF EMBODIMENTS

With reference to the accompanying drawings, the following describes in detail a client device access method, an apparatus, and a system provided in embodiments of this application.

With development of software defined network (software defined network, SDN) technology and network functions virtualization (network functions virtualization, NFV) technologies, a metropolitan area network evolves from a conventional network-centric architecture to a data center-centric network architecture. Conventional network element devices evolve from dedication to generality, which mainly implements two types of decoupling: decoupling of control and forwarding and decoupling of software and hardware.

As a conventional broadband access gateway device, a BNG is very important in user broadband access services and scenarios. Main requirements for BNG devices on user access involve user authentication, access control, traffic scheduling, and the like. With emergence of various Internet services, a requirement for a quantity of user sessions supported by the BNG device continuously increases, a requirement for a user access bandwidth continuously increases, and in particular, a requirement for a capability of the BNG device to provide service openness and programmability externally is increasingly high. Based on these factors, the BNG device implements decoupling of control and forwarding and decoupling of software and hardware based on SDN/NFV architectures.

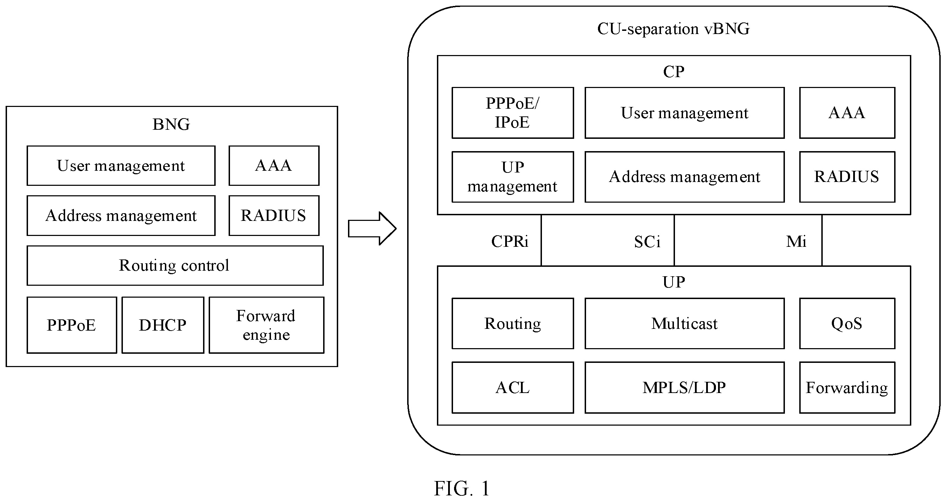

FIG. 1 is a diagram of evolution from a BNG to a vBNG. As shown in FIG. 1, a conventional BNG generally has the following functions: user management (user management), authentication, authorization, and accounting (authentication, authorization, and accounting, AAA), address management (address management), remote authentication dial in user service (remote authentication dial in user service, RADIUS), routing control (routing control), and the like. In addition, the BNG supports the point-to-point protocol over Ethernet (point-to-point protocol over Ethernet, PPPoE) and the dynamic host configuration protocol (dynamic host configuration protocol, DHCP), and has a forward engine (forward engine).

Refer to FIG. 1. A vBNG deployed in a CU separation manner includes a CP device and a plurality of UP devices. The CP device is also referred to as a CP plane, and may be implemented by using a cloudification technology and deployed in a centralized manner. The CP device is used as a control plane of the vBNG, and is configured to control and manage a client device (which may also be referred to as a user) and manage the plurality of UP devices in a unified manner. For example, the CP device is mainly responsible for managing going online of the client device, configuration and user entry delivery, and the like. As shown in FIG. 1, the CP device may have the following functions: user management, AAA, UP management, address management, and RADIUS, and the CP device supports the PPPoE or the IP over Ethernet (IP over Ethernet, IPoE).

The plurality of UP devices of the vBNG are deployed in a distributed manner. Each UP device may also be referred to as a UP plane, and is used as a user plane of the BNG (or the vBNG), to forward a service packet based on a user entry delivered by the CP device. As shown in FIG. 1, each UP device has the following functions: routing, multicast, forwarding, and implementing a traffic policy based on technologies such as quality of service (quality of service, QoS) and an access control list (access control list, ACL). In addition, each UP device may support multi-protocol label switching (multi-protocol label switching, MPLS) and a protocol like a label distribution protocol (label distribution protocol, LDP).

It may be understood that the UP device may also be referred to as a forwarding plane device. Therefore, CU separation may also be referred to as forwarding and control separation, namely, forwarding-control separation. A system deployed in the CU separation manner is also referred to as a CU-separation broadband gateway access system or a forwarding-control-separated broadband gateway access system.

Still refer to FIG. 1. There are three types of interfaces between the CP device and the UP device, and the three types of interfaces are as follows.

A control packet redirect interface (control packet redirect interface, CPRi) uses a VXLAN-GPE interface. After receiving a user access protocol packet, the UP device encapsulates the packet through the CPRi interface and sends the packet to the CP device for processing. VXLAN-GPE refers to virtual extensible local area network (virtual extensible local area network, VXLAN) generic protocol encapsulation (generic protocol encapsulation, GPE).

A management interface (management interface, Mi) uses a network configuration (network configuration, NETCONF) protocol interface. The CP device may deliver a configuration to each UP device through the management interface, and each UP device may report a running status to the CP device through the management interface.

A state control interface (state control interface, SCi) uses a control plane and user plane separation protocol (control plane and user plane separation protocol, CUSP) interface or a packet forwarding control protocol (packet forwarding control protocol, PFCP) interface. After processing the access protocol packet sent by the client device and completing a going-online process of the client device, the CP device may deliver a user entry to a corresponding UP device through the control interface. The user entry is also referred to as a session (session) entry, and generally includes a user name, a user identity (identity, ID), an IP address, a gateway media access control (media access control, MAC) address, domain information, a virtual local area network (virtual local area network, VLAN), an authentication manner, and the like of the client device. In addition, the user entry may further include information such as QoS and an ACL. The authentication manner may include authentication by using an authentication server, local authentication, none authentication, and the like.

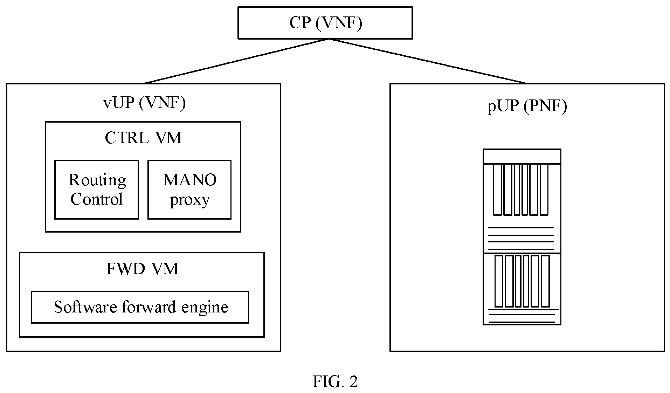

FIG. 2 is a diagram of device forms of a CP device and a UP device according to an embodiment of this application. The CP device may include a plurality of virtual machines (virtual machines, VMs) deployed on a physical server. For example, the CP device may be a virtual network function (virtual network function, VNF) module running on an x86 server. Each UP device may have two forms. One is a physical UP (physical UP, pUP) device, which is implemented by using a physical network function (physical network function, PNF), namely, a conventional hardware network device. The other is a virtual UP (virtual UP, vUP) device, for example, may be a VNF module running on an x86 server, namely, a virtualized network element. In addition, one CP device may manage a plurality of pUP devices and vUP devices.

It can be further learned from FIG. 2 that the vUP device may include a control (control, CTRL) VM and a forwarding (forward, FWD) VM. The CTRL VM is configured to implement functions such as route control and management and orchestration (management and orchestration, MANO) agent (agent). The FWD VM has a software forward engine, and is configured to implement a packet forwarding function.

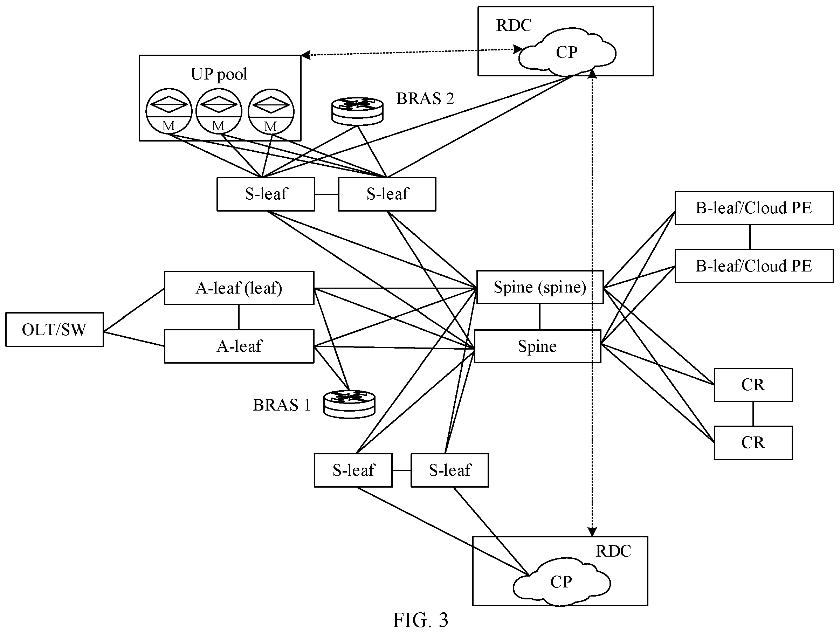

FIG. 3 is a diagram of an application scenario of a broadband gateway access system according to an embodiment of this application. As shown in FIG. 3, a CP device may be deployed in a regional data center (regional data center, RDC) equipment room, which is also referred to as a core equipment room. UP devices may form a UP pool, and may be separately deployed in different aggregation equipment rooms, which are also referred to as edge equipment rooms. In addition, to ensure reliability, disaster recovery may be deployed for the CP device in the broadband gateway access system. In other words, a master (master, M) CP device and a slave (slave, S) CP device may be deployed in the system, and the slave CP device may also be referred to as a standby CP device.

As shown in FIG. 3, a client device may be connected to an access leaf (access leaf, A-leaf) node through an access device like an optical line terminal (optical line terminal, OLT) or a switch (switch, SW). The access leaf node may be further connected to a core router (core router, CR) and a border leaf (border leaf, B-leaf) node or a cloud provider edge (provider edge, PE) device via a spine (spine) node. The CP device and the UP devices may be connected to the spine node via a service leaf (service leaf, S-leaf) node. The client device may be a residential gateway (residential gateway, RGW), a personal computer (personal computer, PC), customer-premises equipment (customer-premises equipment, CPE), or the like.

In a forwarding-control separation vBNG, CP devices are deployed in a centralized manner, and UP devices are deployed in a distributed or pooled manner. The CP device supports 1:1 or 1+1 remote disaster recovery hot backup. When two CP devices are faulty due to a software bug (bug) or a fault of two data centers (data centers, DCs) at the same time, an online client device in the UP device may maintain online, but a new client device cannot go online. To ensure that the new client device can go online normally, a conventional BNG may be used to implement cold backup for protection when the two CP devices are faulty at the same time. Refer to FIG. 3. A fault protection solution may include the following steps.

In option 1 (option 1), a conventional BRAS, namely, a BRAS 1, is connected to the A-leaf node. A link between the CR and the conventional BRAS may be maintained. There is a high probability that faults of the two CPs are caused by a fault in a new metro network. In this case, an emergency channel is retained.

In option 2 (option 2), a conventional BRAS, namely, a BRAS 2, is connected to the S-leaf node. When a client device goes online, a dial-up packet is broadcast to the UP pool and the conventional BRAS. The conventional BRAS can be configured to delay access, for example, to delay access for 3 seconds. In this way, it can be ensured that the client device preferentially responds and goes online from a CU system. If two CPs are faulty, the CP device cannot respond to access of the client device. A client device that already goes online from the UP pool maintains online, and a new client device can go online from the conventional BRAS.

Attention needs to be attached to the following issues in the protection solutions.
1. Precise binding of the conventional BRAS needs to be consistent with that of the CU to ensure that a user can also go online via the conventional BRAS. It is recommended that precise binding maintain a three-dimensional mode without considering a UP-ID parameter. The precise binding means that an account of a client device is precisely bound to information about a location at which the client device goes online through dial-up. If the account requests to go online from another location, access is not allowed. The information about the location may include information such as a line ID, a port, and a VLAN. The three-dimensional mode refers to a port, a stack VLAN (stack VLAN, S-VLAN), and a customer VLAN (customer VLAN, C-VLAN).
2. A delayed response cannot ensure that the user goes online from the CU (CP switchover and the like). It is recommended that a client device accessed from the conventional BRAS be logged out in the early morning every day.
3. A static Internet protocol (Internet protocol, IP) user needs to be re-configured on the conventional BRAS after a fault. If a host route of the static IP user is allowed to be advertised, the static IP user may be configured on the conventional BRAS in advance.

The following describes disadvantages of the solution in which the conventional BNG is used to implement cold backup.

The CP plane bears access of home broadband users in a city or province. Therefore, the fault has large impact. It is not enough to only maintain services of online users. When two CP devices are faulty, the new client device needs to be able to go online. However, in the foregoing solution in which the conventional BNG protects the CU-separation vBNG, a large quantity of conventional BNGs need to be deployed, and costs are high. In addition, two forms of BNGs need to be retained on a live network, and maintenance costs and a configuration workload are also large.

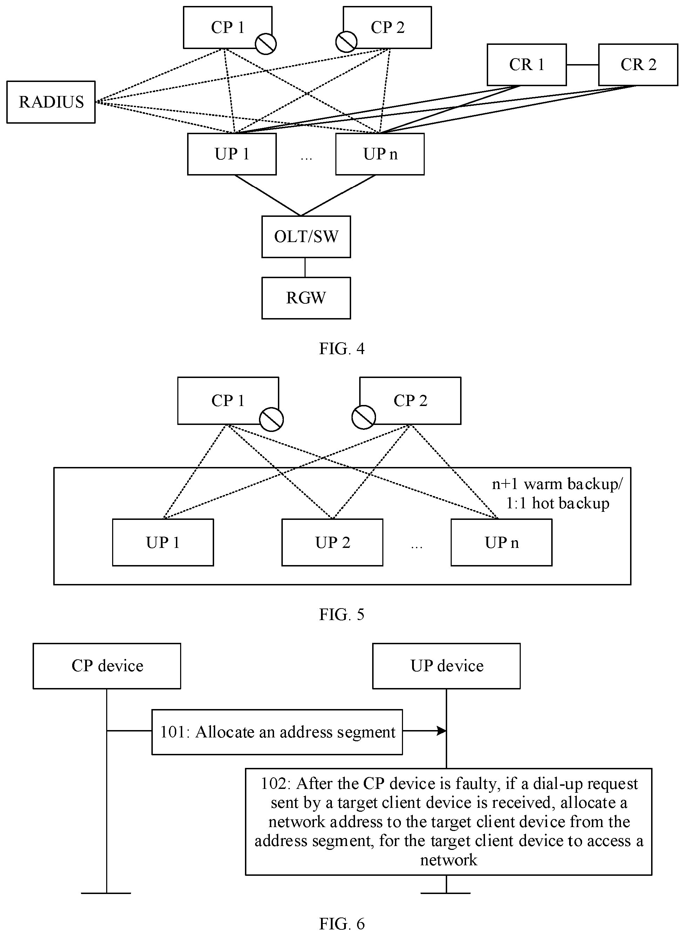

Embodiments of this application provide a client device access method, to ensure that a new user (namely, a new client device) can still normally go online when a CP device is faulty. In addition, the method does not require a conventional BRAS to be deployed, and therefore deployment costs and maintenance costs of the method are low, and a configuration method is simple. The method provided in embodiments of this application may be applied to a CU-separation broadband access system. As shown in FIG. 4, the broadband access system may include two CP devices: a CP 1 and a CP 2, and n UP devices (a UP 1 to a UP n), where n is an integer greater than 1. The two CP devices may implement 1:1 hot backup (to be specific, one CP device is a master CP, and the other CP device is a standby CP), or may implement 1+1 remote disaster recovery hot backup (to be specific, the two CP devices back up each other). Refer to FIG. 4. Each UP device may be dual-uplinked to core devices (to be specific, separately establish a communication connection to a CR 1 and a CR 2), and establish a route connection to each CP device. Client devices such as RGWs may be connected to one or more UP devices after being aggregated using an OLT or an SW. Both the CP device and the UP device further establish a communication connection to an authentication server (for example, a RADIUS server), and the authentication server is responsible for authentication, accounting, and authorization of the client device. As shown in FIG. 5, a plurality of UP devices in a broadband access system may form a backup relationship. For example, the plurality of UP devices may implement n+1 warm backup, or may implement 1+1 or 1:1 hot backup.

FIG. 4 and FIG. 5 are diagrams in which two CP devices are used as an example. It may be understood that only one CP device may be deployed in the broadband access system. Alternatively, more CP devices may be deployed in the broadband access system, and the plurality of CP devices may implement different types of backup relationships. As shown in FIG. 6, a client device access method provided in this embodiment of this application includes the following steps.

Step 101: A CP device allocates an address segment to a UP device.

In this embodiment of this application, during normal operating, the CP device may allocate the address segment to the UP device. The UP device may be any UP device in a broadband access system, and the CP device may allocate a same address segment or different address segments to different UP devices. For example, the CP device may allocate the address segment to the UP device through an SCi interface. The address segment may also be referred to as a subnet segment or a sub-address segment.

It may be understood that, if the broadband access system includes a plurality of CP devices, the CP device for allocating the address segment to the UP device in step 101 may be a master CP device in the plurality of CP devices.

Step 102: After the CP device is faulty, if a dial-up request sent by a target client device is received, the UP device allocates a network address to the target client device from the address segment, for the target client device to access a network.

The UP device may detect, in real time or periodically, whether the CP device is faulty. For example, the UP device may detect, through the SCi interface, whether the CP device is faulty. In addition, after determining that the CP device is faulty, if the dial-up request sent by the target client device is received, the UP device can allocate the network address to the target client device from the address segment allocated by the CP device, for the target client device to access to the network. In other words, after the CP device is faulty, the UP device can switch to an "autonomous driving" mode to directly enable access of the client device based on the address segment delivered by the CP device. In the foregoing procedure, no resource configuration needs to be performed for the UP device, that is, no additional address segment needs to be configured for the UP device, thereby avoiding increasing configuration workload.

It may be understood that, if the broadband access system includes a plurality of CP devices, in step 102, after determining that all the plurality of CP devices are faulty, the UP device may enable the target client device to access the network based on the dial-up request sent by the target client device.

In conclusion, in the client device access method provided in this embodiment of this application, after the CP device is faulty, if receiving the dial-up request sent by the client device, the UP device can enable the client device to access the network based on the address segment delivered by the CP device before the CP device is faulty. In this way, it is ensured that the client device can still normally access the network after the CP device is faulty.

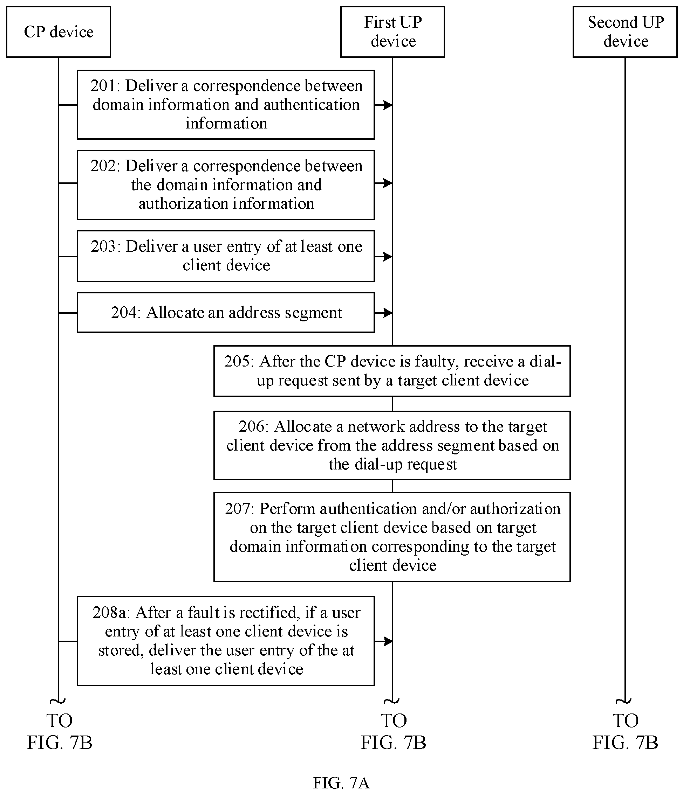

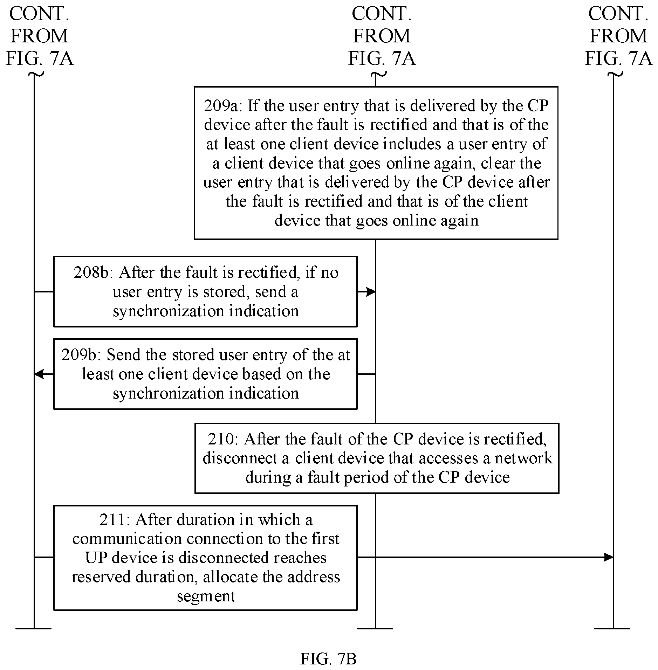

FIG. 7A and FIG. 7B are a flowchart of another client device access method according to an embodiment of this application. The method may be applied to a CU-separation broadband access system, for example, may be applied to the system shown in FIG. 4 or FIG. 5. As shown in FIG. 7A and FIG. 7B, the method may include the following steps.

Step 201: A CP device delivers a correspondence between domain information and authentication information to a first UP device.

In this embodiment of this application, after establishing a connection to the first UP device (that is, establishing a CU link), the CP device may deliver the correspondence between the domain information and the authentication information to the first UP device. For example, the CP device may deliver the correspondence between the domain information and the authentication information through an MI interface. The correspondence may include at least one piece of domain (domain) information (for example, a plurality of pieces of different domain information), and a group of authentication information corresponding to each piece of domain information. In addition, authentication information corresponding to different domain information may be the same or may be different.

The domain information may be a domain name, and the authentication information may include information about an authentication group and an accounting group. The authentication group includes at least one authentication server, and the information about the authentication group may include an identifier or an address of the at least one authentication server. The accounting group includes at least one accounting server, and the information about the accounting group may include an identifier or an address of the at least one accounting server. The authentication information may also be referred to as AAA configuration information, and the authentication information may be used to perform authentication and authorization on a client device.

Step 202: The CP device delivers a correspondence between the domain information and authorization information to the first UP device.

In this embodiment of this application, after establishing the connection to the first UP device, the CP device may deliver the correspondence between the domain information and the authorization information to the first UP device. For example, the CP device may deliver the correspondence between the domain information and the authorization information through the MI interface. The correspondence may include at least one piece of domain information (for example, a plurality of pieces of different domain information) and a group of authorization information corresponding to each piece of domain information, and authorization information corresponding to different domain information may be the same or may be different. The authorization information may include information such as QoS and/or an ACL, and the authorization information may be used to perform authorization on the client device. For example, the QoS information may be used to configure a data transmission rate range of the client device, that is, limit a traffic rate of the client device. The ACL may be used to configure an access control rule, namely, access permission, of the client device.

It may be understood that the foregoing step 202 may be performed before step 201, or may be performed synchronously with step 201. In other words, the CP device may synchronously deliver the correspondence between the domain information and the authentication information and the correspondence between the domain information and the authorization information to the first UP device. In addition, if the CP device establishes connections to a plurality of UP devices, the CP device may separately deliver the correspondence between the domain information and the authentication information and the correspondence between the domain information and the authorization information to the plurality of UP devices.

It may be further understood that the CP device may not need to perform step 201 and/or step 202. Correspondingly, the first UP device can receive a statically configured correspondence between the domain information and the authentication information, and/or a statically configured correspondence between the domain information and the authorization information. The static configuration may be manual configuration by operation and maintenance personnel.

Step 203: The CP device delivers a user entry of at least one client device to the first UP device.

In a normal running process of the CP device, if the CP device receives, via the first UP device, the dial-up request sent by the client device, the CP device can perform protocol interaction with the client device via the first UP device, perform authentication and authorization on the client device by using the authentication server, and allocate an IP address to the client device. Therefore, the CP device can access the client device to the network via the first UP device. In addition, after completing access of the client device, the CP device may further deliver a user entry of the client device to the first UP device. For example, the CP device may deliver the user entry of the client device through the SCi interface. It may be understood that, if the CP device performs protocol interaction with a plurality of client devices via the first UP device, and all the plurality of client devices access the network, the CP device may deliver user entries of the plurality of client devices to the first UP device.

The user entry of each client device includes domain information of the client device. It may be understood that domain information of different client devices may be the same or may be different. In addition, client devices with same domain information (namely, client devices belonging to a same domain) may be authenticated and authorized by a same authentication server. In other words, the CP device may distinguish different user groups by using different domains.

In addition to the domain information, the user entry of each client device may further include at least one piece of the following information: a user name, a user ID, an IP address, a MAC address, a port, VLAN information, an authentication manner, QoS, an ACL, and the like of the client device. The authentication manner may include authentication performed by using the authentication server, local (local) authentication, none (none) authentication, and the like. Information such as the QoS and the ACL related to service performance and permission of the client device is the authorization information of the client device.

In this embodiment of this application, after receiving the user entry of the at least one client device that is delivered by the CP device, the first UP device may store the user entry locally or in a database (database, DB). In addition, after any one of the at least one client device goes offline, the first UP device may continue to store a user entry of the client device. In other words, after the client device goes offline, the first UP device does not delete the user entry of the client device, so that after the CP device is faulty, if the client device requests to go online again, the first UP device can further perform authentication on the client device again based on the previously stored user entry and access the client device to the network.

Optionally, if any one of the at least one client device goes offline, the first UP device may further add an offline flag to a user entry of the client device, to indicate that the client device is offline.

Step 204: The CP device allocates an address segment to the first UP device.

In this embodiment of this application, the CP device can further allocate the address segment to the first UP device. For example, the CP device may deliver the address segment through the SCi interface. The address segment may also be referred to as a subnet segment or a sub-address segment. After receiving the address segment allocated by the CP device, the first UP device may advertise a route of the address segment. It may be understood that if the CP device establishes connections to a plurality of UP devices, the CP device may allocate address segments to all the plurality of UP devices, and the CP device allocates different address segments to different UP devices.

Step 205: After the CP device is faulty, the first UP device receives a dial-up request sent by a target client device.

The first UP device may detect, in real time or periodically, whether the CP device is faulty. For example, the first UP device may detect, through the SCi interface, whether the CP device is faulty. In addition, after determining that the CP device is faulty, the first UP device can still receive the dial-up request sent by the client device (for example, the target client device). For example, the first UP device can receive a PPPoE dial-up request or an IPoE dial-up request sent by the target client device.

Step 206: The first UP device allocates a network address to the target client device from the address segment based on the dial-up request.

In this embodiment of this application, after the CP device is faulty, if receiving the dial-up request sent by the target client device, the first UP device may allocate, based on the dial-up request, the network address to the target client device from the address segment allocated by the CP device, for the target client device to access the network. For example, the first UP device may select an idle IP address from the address segment and allocate the idle IP address to the target client device, where the idle IP address is used as the network address of the target client device, that is, a private network IP address. In a home broadband scenario, a client device is generally always online, and a quantity of client devices that newly go online is small. Therefore, a case in which address resources are insufficient does not exist generally.

It may be understood that, if the broadband access system includes a plurality of CP devices, step 201 to step 204 may be performed by a master CP device in the plurality of CP devices. Correspondingly, in step 205 and step 206, after determining that all the plurality of CP devices (for example, the master CP device and a standby CP device) are faulty, the first UP device may access the target client device to the network based on the dial-up request sent by the target client device.

It may be further understood that, if the broadband access system includes a plurality of UP devices that are in a mutual backup relationship, the dial-up request sent by the target client device may be broadcast to the plurality of UP devices by using an access device like an OLT or an SW. Correspondingly, the plurality of UP devices can all receive the dial-up request of the target client device, and can all send dial-up responses to the target client device. After receiving the dial-up responses sent by the plurality of UP devices, the target client device may select the first UP device in the plurality of UP devices to perform subsequent protocol interaction (for example, may send an access request to the first UP device). The first UP device may further allocate the network address to the target client device, for the target client device to access the network. The first UP device may be a UP device from which the target client device first receives the dial-up response, or may be randomly selected by the target client device.

It may be further understood that, if the plurality of UP devices in the broadband access system are deployed in a 1:1 hot backup mode, that is, one of two UP devices is a master UP device and the other is a standby UP device, the master UP device may be used as the first UP device to send the dial-up response to the target client device, and allocate the network address to the target client device. In other words, in a 1:1 hot backup scenario, the master UP device may perform dial-up response.

Step 207: The first UP device performs authentication and/or authorization on the target client device based on target domain information corresponding to the target client device.

In addition to allocating the network address to the target client device based on the dial-up request, the first UP device may further obtain the target domain information corresponding to the target client device, and perform authentication and/or authorization on the target client device based on the target domain information. Therefore, access reliability of the target client device can be ensured.

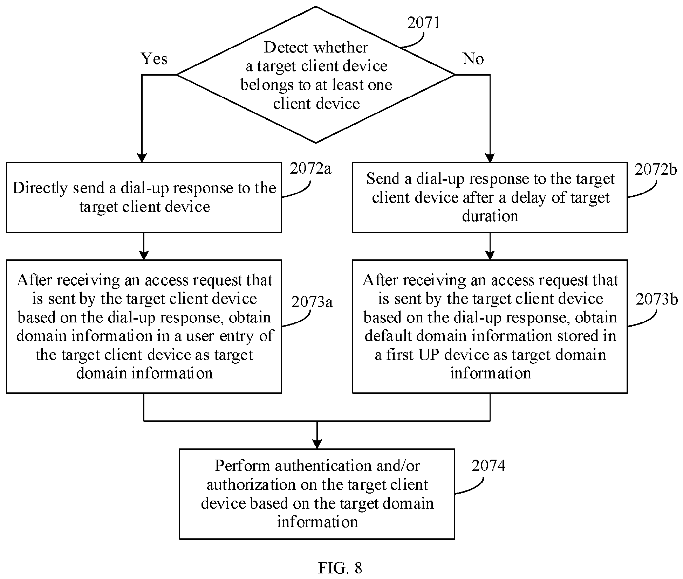

As shown in FIG. 8, a process in which the first UP device performs authentication and/or authorization on the target client device based on the target domain information corresponding to the target client device may include the following steps.

Step 2071: Detect whether the target client device belongs to the at least one client device.

The at least one client device is a client device whose user entry is stored in the first UP device. In other words, the first UP device may detect whether the first UP device stores a user entry of the target client device. If the target client device belongs to the at least one client device, the first UP device may perform step 2072a. If the target client device does not belong to the at least one client device, the first UP device may perform step 2072b.

Step 2072a: Directly send the dial-up response to the target client device.

If the target client device belongs to the at least one client device, that is, the first UP device determines that the first UP device stores the user entry of the target client device, the first UP device may determine that the target client device has accessed the network via the first UP device. Correspondingly, the first UP device can perform authentication and/or authorization again on the target client device based on configuration information (for example, authentication and authorization information) used when the target client device previously accesses the network. Based on this, the first UP device may directly send the dial-up response to the target client device, so that the target client device can preferentially access the network via the first UP device.

For example, after determining that the target client device belongs to the at least one client device, the first UP device may immediately send a PPPoE dial-up response or an IPoE dial-up response to the target client device.

Step 2073a: After receiving an access request that is sent by the target client device based on the dial-up response, obtain domain information in the user entry of the target client device as the target domain information.

After sending the dial-up response, if the access request that is sent by the target client device based on the dial-up response is received, the first UP device may determine that the target client device selects the first UP device to access the network. Correspondingly, the first UP device may obtain the domain information in the user entry of the target client device, and use the domain information as the target domain information, to perform authentication and/or authorization on the target client device. The first UP device may query, based on identification information of the target client device, the user entry stored in the first UP device, to obtain the user entry of the target client device. The identification information may include a MAC address, or in addition to the MAC address, further include port and VLAN information.

For example, it is assumed that the target client device performs dial-up based on the PPPoE, the dial-up request may be a PPPoE active discovery initiation (PPPoE active discovery initiation, PADI) packet. The dial-up response sent by the first UP device after receiving the dial-up request may be a PPPoE active discovery offer (PPPoE active discovery offer, PADO) packet. The access request sent by the target client device based on the dial-up response may be a PPPoE active discovery request (PPPoE active discovery request, PADR) packet. Then, the first UP device may further send a PPPoE active discovery session (PPPoE active discovery session, PADS) packet and the like to the target client device, to implement subsequent protocol interaction with the target client device.

It may be understood that, if all the plurality of UP devices in the broadband access system store the user entry of the target client device, all the plurality of UP devices may directly send the dial-up responses to the target client device. After receiving the dial-up responses sent by the plurality of UP devices, the target client device may send the access request to the first UP device in the plurality of UP devices. The first UP device may be a UP device from which the target client device first receives the dial-up response or may be a UP device randomly selected by the target client device.

Step 2072b: Send the dial-up response to the target client device after a delay of target duration.

In step 207, if the target client device does not belong to the at least one client device, that is, the first UP device determines that the first UP device does not store the user entry of the target client device, the first UP device may determine that the target client device has not accessed the network from the first UP device before. Based on this, the first UP device may send the dial-up response to the target client device after the delay of the target duration, so that another UP device that has accessed the target client device may preferentially send the dial-up response. In other words, according to the solution provided in this embodiment of this application, the target client device can preferentially go online again from the accessed UP device.

The target duration may be preconfigured in the first UP device, and the target duration may be flexibly adjusted based on requirements of an application scenario. For example, the target duration may be 3 seconds (s).

It may be understood that, if none of the UP devices in the broadband access system stores the user entry of the target client device, the UP devices in the broadband access system may send the dial-up responses to the target client device after the delay of the target duration. After receiving the dial-up responses sent by the plurality of UP devices, the target client device may send the access request to the first UP device in the plurality of UP devices. The first UP device may be a UP device from which the target client device first receives the dial-up response or may be a UP device randomly selected by the target client device.

Step 2073b: After receiving the access request that is sent by the target client device based on the dial-up response, obtain default domain information stored in the first UP device as the target domain information.

After sending the dial-up response, if the access request that is sent by the target client device based on the dial-up response is received, the first UP device may determine that the target client device selects the first UP device to access the network. Because the first UP device does not store the user entry of the target client device, the first UP device may obtain the default domain information stored in the first UP device and use the default domain information as the target domain information, to perform authentication and/or authorization on the target client device based on the default domain information.

The default domain information may be delivered by the CP device, or may be statically configured in the first UP device. This is not limited in embodiments of this application.

Step 2074: Perform authentication and/or authorization on the target client device based on the target domain information.

After obtaining the target domain information corresponding to the target client device in the foregoing manner, the first UP device may perform authentication and/or authorization on the target client device based on the target domain information.

Optionally, the first UP device may obtain authentication information corresponding to the target domain information from the correspondence that is stored in the first UP device and that is between the domain information and the authentication information, and perform authentication and authorization on the target client device by using an authentication device (for example, an authentication server) indicated by the authentication information. Alternatively, the first UP device may obtain authorization information corresponding to the target domain information, and perform authorization on the target client device based on the authorization information.

It may be understood that, if the dial-up request sent by the target client device carries the domain information, the first UP device may directly obtain the domain information in the dial-up request as the target domain information, and may directly send the dial-up response to the target client device. Then, after receiving the access request sent by the target client device, the first UP device may perform authentication and/or authorization on the target client device based on the target domain information.

In other words, in a scenario in which the dial-up request carries the domain information, the first UP device may directly send the dial-up response without detecting whether the first UP device stores the user entry of the target client device, that is, the first UP device does not need to perform the method shown in step 2071.

In a first possible example, the first UP device does not store the user entry of the target client device, or the first UP device stores the user entry of the target client device, and an authentication manner of the target client device recorded in the user entry is authentication performed by using the authentication server. In the first example, the first UP device may obtain the authentication information corresponding to the target domain information from the correspondence that is stored in the first UP device and that is between the domain information and the authentication information. Then, the first UP device may perform authentication interaction with the authentication server indicated by the authentication information, to implement authentication and authorization on the target client device. In addition, after enabling the target client device to access the network, the first UP device may further perform accounting interaction with an accounting server indicated by the authentication information, to implement accounting on the target client device.

In a second possible example, the first UP device stores the user entry of the target client device, and an authentication manner of the target client device recorded in the user entry is local authentication. Correspondingly, the first UP device may directly perform authentication and authorization on the target client device based on the pre-stored configuration information.

In a third possible example, the first UP device stores the user entry of the target client device, and an authentication manner of the target client device recorded in the user entry is none authentication. Correspondingly, the first UP device may obtain the authorization information from the user entry of the target client device, and perform authorization on the target client device based on the authorization information.

It may be understood that, in the foregoing first example, if the correspondence that is stored in the first UP device and that is between the domain information and the authentication information does not record the authentication information corresponding to the target domain information, in this case, the first UP device may obtain the authorization information corresponding to the target domain information from the correspondence that is stored in the first UP device and that is between the domain information and the authorization information, and perform authorization on the target client device based on the authorization information. For example, it is assumed that the target domain information is the default domain information, the first UP device may not store the authentication information corresponding to the default domain information, but store only corresponding default authorization information. Based on this, the first UP device may perform basic authorization on the target client device based on the default authorization information, and does not need to perform authentication and accounting on the target client device.

Based on the foregoing examples, it can be learned that if the first UP device obtains the authentication information corresponding to the target domain information, the first UP device may perform authentication and authorization on the target client device based on the authentication information. If the first UP device does not obtain the authentication information corresponding to the target domain information, or if the authentication manner recorded in the user entry of the target client device indicates none authentication, the first UP device may perform authorization on the target client device based on the authorization information corresponding to the target domain information.

If the first UP device stores the user entry of the target client device, corresponding authorization information may be obtained from the user entry. If the first UP device does not store the user entry of the target client device, the authorization information corresponding to the target domain information may be obtained from the pre-stored correspondence between the domain information and the authorization information.

In this embodiment of this application, that the first UP device performs authorization on the target client device may be: configuring a data transmission rate range and/or an access control rule of the target client device.

For example, if the authorization information corresponding to the target domain information includes access permission-related information such as the ACL, the first UP device may configure the access control rule of the target client device based on the access permission-related information. If the authorization information corresponding to the target domain information includes the QoS information, the first UP device may configure the data transmission rate range of the target client device based on the QoS information. For example, the first UP device may configure an upper limit of a data transmission rate of the target client device, that is, limit a traffic rate of the target client device. The data transmission rate may also be referred to as a bandwidth. For example, the upper limit of the data transmission rate may be 10 megabits per second (Mbps), that is, the first UP device may limit a bandwidth of the target client device to 10 Mbps.

Optionally, in step 206 or step 207, the first UP device may further mark a client device that goes online during a fault period of the CP device (that is, during the out-of-management period), for example, may add an online flag to a user entry of the client device. Therefore, it can be easily distinguished from a client device that goes online before the CP device is out of management.

Based on the foregoing step 206 and step 207, it can be learned that after the CP device is faulty, the first UP device can switch to the "autonomous driving" mode, and the client device that is online may maintain online. For a client device that newly goes online, the first UP device may directly enable access of the client device based on the address segment and the configuration information (for example, the correspondence between the domain information and the authentication information, and/or the correspondence between the domain information and the authorization information) that are delivered by the CP device. Therefore, on one hand, reliability of the broadband access system is effectively improved, on the other hand, because no additional service and resource configuration needs to be performed in the UP device, an increased configuration workload can be avoided, and a deployment process can be simplified.

In addition, after the client device goes offline, the first UP device can retain the user entry of the client device. Therefore, when the client device requests to re-access the network, based on the user entry that is of the client device and that is used when the client device previously goes online, the first UP device can perform authentication on the client device again and perform accounting on the client device. Therefore, a problem that effective authentication and accounting cannot be performed on the client device can be avoided, and reliability of accessing the network by the client device is ensured.

Step 208a: After the fault of the CP device is rectified, if the CP device stores a user entry of at least one client device, the CP device delivers the user entry of the at least one client device to the first UP device.

In this embodiment of this application, after the fault of the CP device is rectified, the CP device may reestablish a connection to the first UP device. In addition, if the CP device stores the user entry of the at least one client device, the CP device may deliver the user entry of the at least one client device to the first UP device. In other words, the CP device may synchronize user data to the first UP device after the fault is rectified.

Step 209a: If the user entry of the at least one client device that is delivered by the CP device after the fault is rectified includes a user entry of a client device that goes online again, clear the user entry of the client device that goes online again that is delivered by the CP device after the fault is rectified.

The client device that goes online again is a client device that accesses the network before the CP device is faulty and that is re-accessed to the network by the first UP device after the client device goes offline during the fault period of the CP device. After receiving the user data synchronized by the CP device, if detecting that the user data includes the user entry of the client device that goes online again, the first UP device may clear the user entry of the client device that goes online again that is delivered by the CP device after the fault is rectified. In other words, for the client device that goes online again during the out-of-management period of the CP device, the user entry of the client device is subject to data locally stored in the first UP device.

Optionally, after clearing the user entry of the client device that goes online again, the first UP device may further reversely synchronize the user entry of the client device that goes online again to the CP device, and send a notification message to the CP device. The notification message indicates, to the CP device, that the client device that goes online again goes online again on the first UP device.

In a possible implementation, after the first UP device receives the user entry delivered by the CP device after the fault is rectified, a user entry of at least one client device (that is, the client device that newly goes online during the out-of-manageable period) that accesses the network when the CP device is faulty may be further sent to the CP device, that is, reversely synchronized to the CP device.

After receiving the user entry reversely synchronized by the first UP device, the CP device can compare a user entry stored before the CP device is out of management with a user entry of the client device that newly goes online from the first UP device. If the user entry of the client device that newly goes online from the first UP device is the same as the user entry stored in the CP device before the CP device is out of management, the CP device may delete the user entry stored before the CP device is out of management, and notify the first UP device to also delete the user entry used before the CP device is out of management. In addition, the CP device marks, in an address pool of a CP plane, a network address (that is, an IP address) occupied by the client device that newly goes online in the first UP device as occupied, to avoid the network address from being allocated to another client device that newly goes online. That two user entries are the same may mean that MAC addresses in the user entries are the same, or may mean that MAC addresses are the same and user accounts (for example, a user name and a user ID) are the same, or may mean that MAC addresses are the same and port and VLAN information is also the same.

In another possible implementation, after the fault of the CP device is rectified, if the CP device stores a user entry of at least one client device, the CP device may first indicate the first UP device to synchronize, to the CP device, a user entry of a client device that goes online during the fault period of the CP device. After receiving the user entry that is sent by the first UP device and that is of the at least one client device that goes online during the fault period of the CP device, if detecting that any user entry sent by the first UP device is the same as a user entry of any client device stored in the CP device, the CP device may delete the user entry of the any client device stored in the CP device. Then, the CP device sends, to the first UP device, a user entry that is currently stored in the CP device and that is of at least one client device that goes online before the CP device is faulty. In other words, the user data synchronized by the CP device to the first UP device does not include the user entry of the any client device that is deleted by the CP device.

In addition, in this implementation, the CP device also marks, in the address pool of the CP plane, the network address occupied by the client device that newly goes online in the first UP device as occupied, to avoid the network address from being allocated to another client device that newly goes online.

After CU data synchronization is completed in the foregoing manner, if detecting that a client device that goes online before the CP device is out of management is currently offline, the first UP device may perform aging processing on the client device. In addition, aging processing does not need to be performed on a client device that newly goes online during the out-of-management period of the CP device. An aging processing process includes: The first UP device indicates the CP device to perform a going-offline process on an offline client device; and based on a notification of the first UP device, the CP device deletes the user entry of the client device that is stored in the CP device, and indicates the first UP device to also delete the user entry of the client device.

It may be understood that, after receiving the user data synchronized by the CP device, the first UP device may not need to detect whether a user entry of a client device that goes online again exists in the user data, but uses the user data synchronized by the CP device.

Step 208b: After the fault of the CP device is rectified, if the CP device does not store the user entry, the CP device sends a synchronization indication to the first UP device.

In this embodiment of this application, after the fault of the CP device is rectified, if the CP device does not store the user entry, in other words, the user entry previously stored in the CP device is lost, the CP device may send the synchronization indication to the first UP device. The synchronization indication indicates the first UP device to reversely synchronize the user entry to the CP device.

If a data center in which the CP device is located is powered off, and persistence is not performed on a database corresponding to the CP device, after the fault of the CP device is rectified, the user entry may be lost.

Step 209b: The first UP device sends the stored user entry of the at least one client device to the CP device based on the synchronization indication.

After receiving the synchronization indication sent by the CP device, the first UP device may send, to the CP device, the user entry of the at least one client device that is stored in the first UP device , to implement reverse synchronization of the user data. Therefore, reliability of the CP device during working may be ensured.

In a possible implementation, the first UP device may send, to the CP device based on the synchronization indication, the user entry that is stored in the first UP device and that is of the at least one client device that meets a synchronization condition. Correspondingly, the CP device can receive the user entry that is sent by the first UP device and that is of the at least one client device that meets the synchronization condition.

The synchronization condition may include: The client device accesses the network before the CP device is faulty, and the client device is still in an online state. In other words, the first UP device may synchronize, to the CP device, a user entry of a client device that goes online before the CP device is out of management and that is still online currently. Correspondingly, for a client device that is offline (for example, a client device added with an offline flag) during the out-of-management period of the CP device, and a client device that newly goes online (for example, a client device to which an online flag is added) during the out-of-management period of the CP device, the first UP device does not need to synchronize user entries of these client devices to the CP device.

In this implementation, because the first UP device does not need to synchronize the user entry of the offline client device to the CP device, efficiency and accuracy of data synchronization can be ensured. In addition, because the client device that newly goes online during the out-of-management period of the CP device may not be authenticated, the UP device does not need to synchronize the user entry of the client device that newly goes online, to ensure reliability of the data synchronization.

In another possible implementation, the first UP device may send, to the CP device based on the synchronization indication, a user entry of at least one client device that goes online before the CP device is faulty and a user entry of at least one client device that goes online during a fault period of the CP device. In other words, the first UP device may reversely synchronize, to the CP device, user entries of that are of client devices and that are stored in the first UP device.

After receiving the user entries reversely synchronized by the first UP device, the CP device can compare user entries of client devices that go online before the CP device is faulty with user entries of client devices that go online during the fault period of the CP device. If a user entry of any client device that goes online during the fault period of the CP device is the same as a user entry of any client device that goes online before the CP device is faulty, the CP device may delete the user entry of the any client device that goes online before the CP device is faulty. In addition, the CP device may send a deletion notification to the first UP device, to indicate the first UP device to also delete the user entry of the any client device that goes online before the CP device is out of management. In other words, if a client device goes online before the CP device is out of management, goes offline after the CP device is out of management, and goes online again from the first UP device, a user entry obtained after the client device goes online again is used.

In addition, after the fault of the CP device is rectified, if detecting that a client device is offline, the first UP device may perform an aging procedure on the client device. For example, the first UP device may indicate, to the CP device, that the client device is offline, and the CP device may further delete, based on the indication, the user entry of the client device that is stored in the CP device, and notify the first UP device to also delete the user entry of the client device. In this way, a going-offline process of the client device is completed.

In still another possible implementation, the first UP device may send, to the CP device based on the synchronization indication, a user entry of at least one client device that accesses the network during the fault period of the CP device. The CP device may synchronize an empty user entry to the first UP device. Then, the first UP device may perform aging processing on a client device that goes online before the CP device is faulty and does not go online again subsequently (that is, the client device is offline currently), and does not need to perform aging processing on a client device that newly goes online after the CP device is faulty.

It may be understood that, in the foregoing implementations, the CP device marks, in the address pool of the CP plane, the network address occupied by the client device that newly goes online in the first UP device as occupied, to avoid the network address from being allocated to another client device that newly goes online.

Step 210: After the fault of the CP device is rectified, the first UP device disconnects the client device that accesses the network during the fault period of the CP device.

In this embodiment of this application, after the fault of the CP device is rectified, the CP device can reestablish a connection to the first UP device. The first UP device may determine, based on the re-established connection between the first UP device and the CP device, that the fault of the CP device is rectified. In addition, the first UP device may disconnect the client device that accesses the network during the fault period of the CP device. For example, the first UP device may delete, in a predetermined time period (for example, early morning) after the fault of the CP device is rectified, the user entry to which the online flag is added, to disconnect the client device that goes online during the out-of-management period.

Because client devices that go online during the fault period of the CP device may not be authenticated, to ensure access reliability of the client device, the first UP device may disconnect the client devices, so that the client devices can access the network after being re-authenticated.

It may be understood that, after the fault of the CP device is rectified, operation and maintenance personnel may also manually disconnect the client device that accesses the network during the out-of-management period. A manner of clearing the client device is not limited in embodiments of this application.

Step 211: After duration in which a communication connection to the first UP device is disconnected reaches reserved duration, the CP device allocates the address segment to the second UP device.

In this embodiment of this application, if detecting that the communication connection between the CP device and the first UP device is disconnected, the CP device may wait for the reserved duration, and then reallocate, to the second UP device, the address segment allocated to the first UP device. The reserved duration may be pre-stored in the CP device, and the reserved duration may be determined based on fault processing duration of a CU link disconnection. For example, the reserved duration may be one hour. The allocated address segment is reserved for specific duration and then the address segment is reallocated to another UP device, so that a probability of a route conflict on a UP side may be effectively reduced.

Optionally, to effectively avoid the route conflict on the UP side, after disconnecting the communication connection to the first UP device, the CP device may no longer allocate the address segment of the first UP device to another UP device.

It may be understood that a sequence of steps of the client device access method provided in embodiments of this application may be properly adjusted, and steps may be correspondingly added or deleted based on a situation. For example, step 201 and/or step 202 may be deleted based on a situation, that is, the correspondence between the domain information and the authentication information, and/or the domain information and the authorization information may be statically configured in the first UP device. Alternatively, step 207 may be deleted based on a situation, that is, the first UP device may not need to perform authentication and authorization on the target client device. Alternatively, step 209a and/or step 210 may be deleted based on a situation. Alternatively, step 211 may be performed before step 210. For example, step 211 may be performed before the CP device is faulty.

In conclusion, in the client device access method provided in embodiments of this application, after the CP device is faulty, if receiving the dial-up request sent by the client device, the first UP device can enable the client device to access the network based on the address segment delivered by the CP device before the CP device is faulty. In this way, it is ensured that the client device can still normally access the network after the CP device is faulty.

In addition, after the client device goes offline, the first UP device can retain the user entry of the client device. Therefore, when the client device requests to re-access the network, based on the user entry that is of the client device and that is used when the client device previously goes online, the first UP device may perform authentication on the client device again and perform accounting on the client device. Therefore, a problem that effective authentication and accounting cannot be performed on the client device can be avoided, and reliability of accessing the network by the client device is ensured.

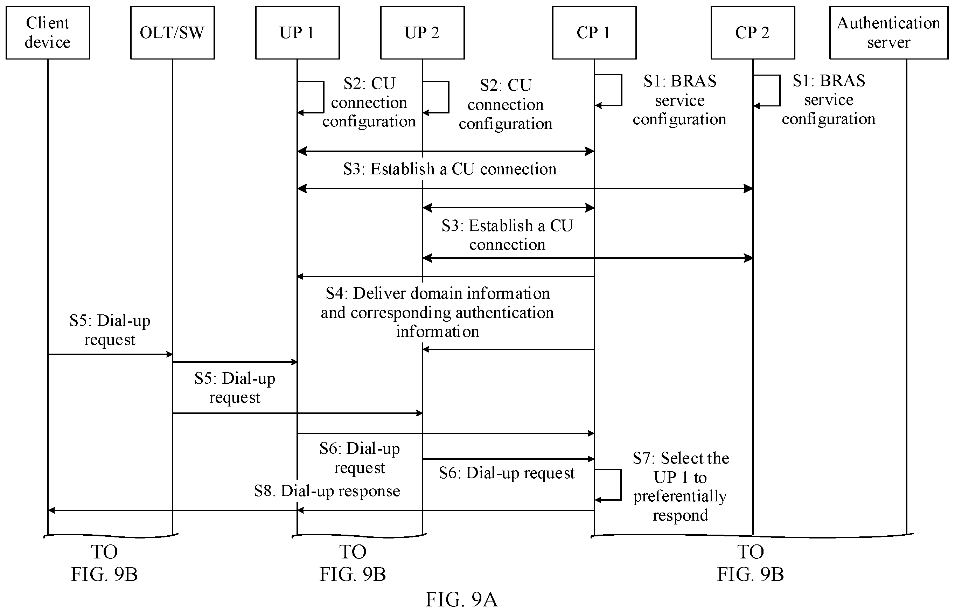

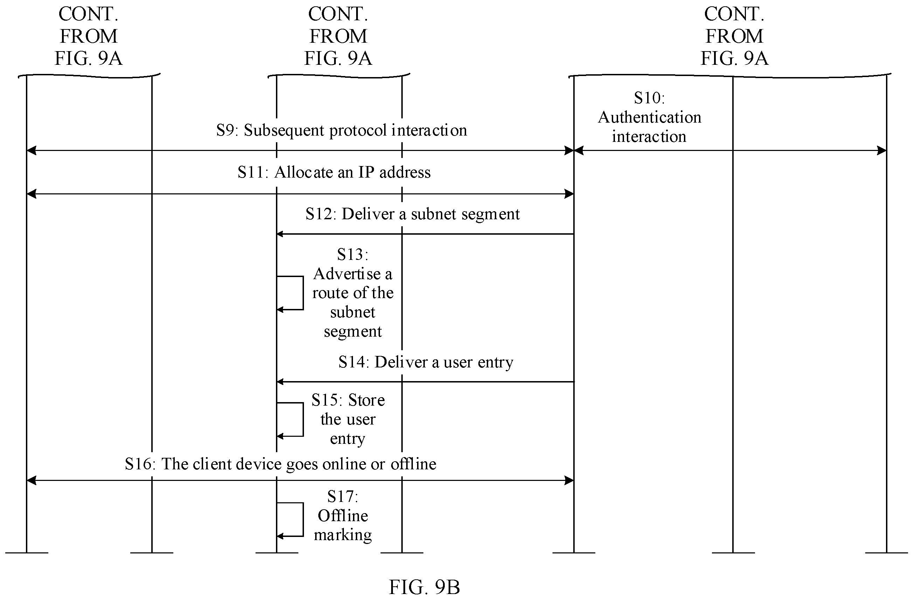

The following describes the solution provided in embodiments of this application by using an example in which the broadband access system includes two CP devices: a CP 1 and a CP 2, and includes two UP devices: a UP 1 and a UP 2. The UP 1 and the UP 2 may be two UP devices in a mutual backup relationship, the CP 1 may be a master CP device, and the CP 2 may be a standby CP device. Refer to FIG. 9A and FIG. 9B. A client device access method includes the following steps.

Step S1: The CP 1 and the CP 2 separately perform BRAS service configuration.

Step S2: The UP 1 and the UP 2 separately perform CU connection configuration.

Step S3: A CP device establishes a CU connection to a UP device.

It can be learned from FIG. 9A and FIG. 9B that the CP 1 can separately establish CU connections to the UP 1 and the UP 2, and the CP 2 can also separately establish CU connections to the UP 1 and the UP 2.

Step S4: The CP 1 separately delivers domain information and corresponding authentication information to the UP 1.

As the master CP device, the CP 1 may separately deliver domain information and corresponding authentication information (also referred to as AAA configuration information) to the UP 1 and the UP 2 through an MI interface.

Step S5: A client device sends a dial-up request to the UP 1 and the UP 2.

As shown in FIG. 9A and FIG. 9B, the client device may send the dial-up request to an access device like an OLT or an SW, and the access device may broadcast the dial-up request to the UP 1 and the UP 2.

Step S6: The UP 1 and the UP 2 send the dial-up request to the CP 1.

Step S7: The CP 1 selects the UP 1 to preferentially respond.

After receiving dialing requests sent by the UP 1 and the UP 2, the CP 1 may select one UP device from the two UP devices to respond to the dial-up request. For example, the CP 1 may select the UP 1 to respond.

Step S8: The CP 1 sends a dial-up response to the client device via the UP 1.

Step S9: The client device performs subsequent protocol interaction with the CP 1 via the UP 1.

Step S10: The CP 1 performs authentication interaction with an authentication server to perform authentication and authorization on the client device.

Step S11: The CP 1 allocates an IP address to the client device.

Step S12: The CP 1 delivers a subnet segment to the UP 1.

For example, the CP 1 may deliver the subnet segment to the UP 1 through an SCi interface.

Step S13: The UP 1 advertises a route of the subnet segment.

Step S14: The CP 1 delivers a user entry to the UP 1.

After enabling the client device to access a network, the CP 1 may deliver the user entry of the client device to the UP 1 through the SCi interface.

Step S15: The UP 1 stores the user entry.

In this embodiment of this application, after receiving the user entry delivered by the CP 1, the UP 1 may store the user entry locally or in a database.

Step S16: The client device goes online or offline.

For a going-online process of another client device, refer to the foregoing step S5 to step S15. If the online client device goes offline, the UP 1 may perform step S17.

Step S17: Mark the offline client device as offline.

If an online client device goes offline normally, the UP 1 may refresh a user entry of the client device that is stored in the UP 1, where an offline flag is added to the refreshed user entry. In other words, after the client device goes offline, the UP 1 updates the user entry of the client device, but does not delete the user entry.

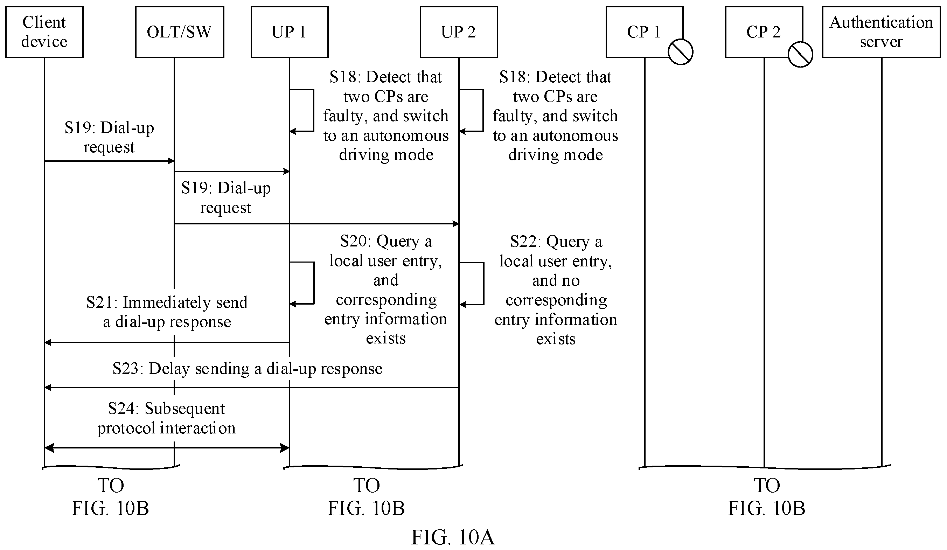

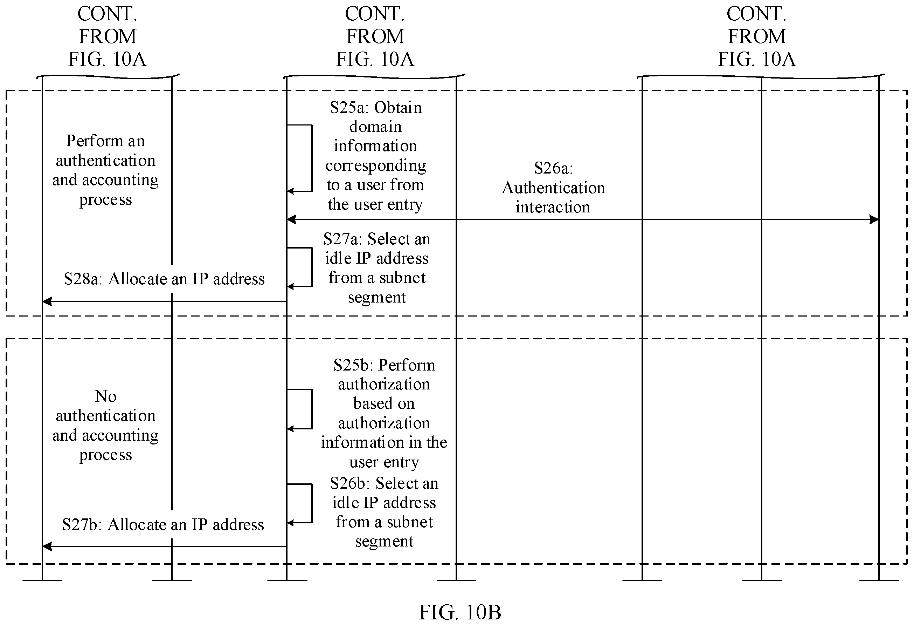

FIG. 10A and FIG. 10B are a flowchart of the client device access method after the CP device is faulty according to an embodiment of this application. As shown in FIG. 10A and FIG. 10B, the method may include the following steps.

Step S18: The UP 1 and the UP 2 detect that the two CPs are faulty, and switch to an autonomous driving mode.

The UP 1 and the UP 2 may separately detect the CP 1 and the CP 2 through the SCi interface. If detecting that both the two CP devices are faulty, the UP 1 and the UP 2 may switch to the autonomous driving mode. In the autonomous driving mode, the UP 1 and the UP 2 may separately maintain an online client device to be online, and access a new client device to a network.

Step S19: The client device sends the dial-up request to the UP 1 and the UP 2.

As shown in FIG. 10A and FIG. 10B, the new client device may send the dial-up request to the access device like the OLT or the SW, and the access device may broadcast the dial-up request to the UP 1 and the UP 2.

Step S20: The UP 1 queries a local user entry, and corresponding entry information exists.

In this embodiment of this application, after receiving the dial-up request of the client device, the UP 1 may query, based on an identifier (for example, a MAC address) of the client device, the user entry stored in the UP 1. If a user entry of the client device exists, step S21 may be performed.

Step S21: The UP 1 immediately sends the dial-up response.

If the UP 1 stores the user entry of the client device, the UP 1 may immediately respond to the dial-up request of the client device.

Step S22: The UP 2 queries the local user entry, and no corresponding entry information exists.

In this embodiment of this application, after receiving the dial-up request of the client device, the UP 2 may also query, based on the identifier (for example, the MAC address) of the client device, the user entry stored in the UP 2. If the user entry of the client device does not exist, step S23 may be performed.

Step S23: The UP 2 delays sending the dial-up response.

If the UP 2 does not store the user entry of the client device, the UP 2 may respond to the dial-up request of the client device after a delay (for example, 3s).

Step S24: The client device performs subsequent protocol interaction with the UP 1.

After receiving the dial-up response sent by the UP 1, the client device may perform subsequent protocol interaction with the UP 1.

In a first possible implementation, if the user entry of the client device includes an authentication manner, and the authentication manner indicates that authentication and accounting need to be performed on the client device, the UP 1 may perform the following operations:

Step S25a: The UP 1 obtains domain information corresponding to a user from the user entry.

In this embodiment of this application, if the dial-up request sent by the client device does not carry the domain information, the UP 1 may obtain the domain information of the client device from the user entry locally stored in the UP 1.

Step S26a: The UP 1 performs authentication interaction with the authentication server.

After obtaining the domain information, the UP 1 may obtain authentication information corresponding to the domain information of the client device by querying a correspondence that is delivered by the CP 1 and that is between the domain information and the authentication information. Then, the UP 1 may perform authentication interaction with the authentication server indicated by the authentication information, to implement authentication and authorization on the client device. In addition, after the client device goes online, the UP 1 may further perform accounting on the client device by using an accounting server indicated by the authentication information.

Step S27a: The UP 1 selects an idle IP address from the subnet segment.

Step S28a: The UP 1 allocates the IP address to the client device.

After completing authentication on the client device, the UP 1 may allocate the IP address to the client device from the subnet segment delivered by the CP 1, for the client device to access the network.

In a second possible implementation, if the user entry of the client device includes the authentication manner, and the authentication manner indicates that authentication and accounting do not need to be performed on the client device, the UP 1 may perform the following operations:

Step S25b: The UP 1 performs authorization based on the authorization information in the user entry.

In this embodiment of this application, if none authentication and accounting needs to be performed on the client device, the UP 1 may obtain the authorization information of the client device from the user entry locally stored in the UP 1, and perform authorization on the client device based on the authorization information. For example, the UP 1 may perform rate limiting on the client device based on QoS information in the authorization information, and/or restrict access permission of the client device based on an ACL in the authorization information.

Step S26b: The UP 1 selects the idle IP address from the subnet segment.

Step S27b: The UP 1 allocates the IP address to the client device.

After completing authorization on the client device, the UP 2 may allocate the IP address to the client device from the subnet segment delivered by the CP 1, for the client device to access the network. It may be understood that the foregoing step S25b to step S27b may be performed synchronously.

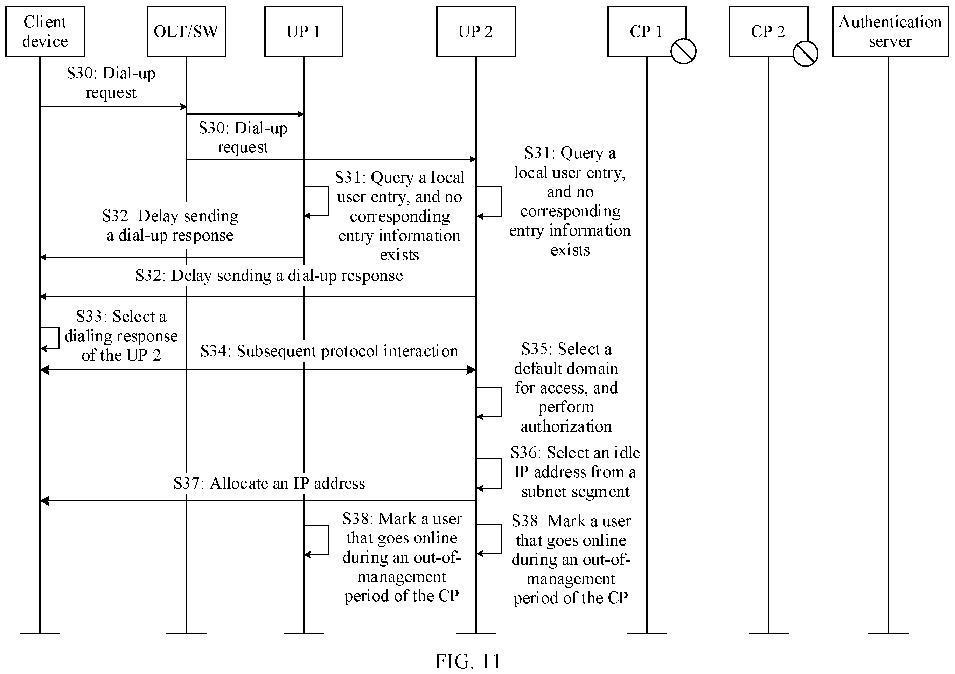

FIG. 11 is a flowchart of another client device access method after the CP device is faulty according to an embodiment of this application. As shown in FIG. 11, the method may include the following steps.

Step S30: The client device sends the dial-up request to the UP 1 and the UP 2.

Step S31: The UP 1 and the UP 2 query local user entries, and no corresponding entry information exists.

In this embodiment of this application, after receiving the dial-up request of the client device, the UP 1 and the UP 2 may query, based on the identifier (for example, the MAC address) of the client device, the user entries stored in the UP 1 and the UP 2. If the user entry of the client device does not exist, step S32 may be performed.

Step S32: The UP 1 and the UP 2 delay sending dial-up responses.

If neither the UP 1 nor the UP 2 stores the user entry of the client device, both the UP 1 and the UP 2 may respond to the dial-up request of the client device after the delay (for example, the delay of 3s).

Step S33: The client device selects the dial-up response of the UP 2.

In this embodiment of this application, after receiving the dial-up responses of the UP 1 and the UP 2, the client device may select one of the UP devices to perform subsequent protocol interaction. For example, if the client device first receives the dial-up response of the UP 2, the client device may select the UP 2 to perform subsequent protocol interaction.

Step S34: The client device performs subsequent protocol interaction with the UP 2.

Step S35: The UP 2 selects a default domain for access, and performs authorization.

After the UP 2 performs subsequent protocol interaction with the client device, because the UP 2 does not store the user entry of the client device, it may be determined that the client device accesses the network from the UP 2 for a first time. Correspondingly, the UP 2 may access the client device to the default domain, and perform local authorization. In other words, the UP 2 may perform authorization on the client device based on default domain information stored in the UP 2, and does not need to perform authentication and accounting on the client device.

It may be understood that, if the UP 2 stores authentication information corresponding to the default domain, the UP 2 may also perform authentication and authorization on the client device based on the authentication information. In addition, the UP 2 may perform accounting on the client device after the client device goes online.

Step S36: The UP 2 selects the idle IP address from the subnet segment.

Step S37: The UP 2 allocates the IP address to the client device.

Step S38: The UP 1 and the UP 2 mark a user that goes online during an out-of-management period of the CP.

In this embodiment of this application, for a client device that goes online during the out-of-management period of the CP device, both the UP 1 and the UP 2 may add an online flag to a user entry of the client device, to distinguish the client device from a client device that goes online before the CP device is out of management.

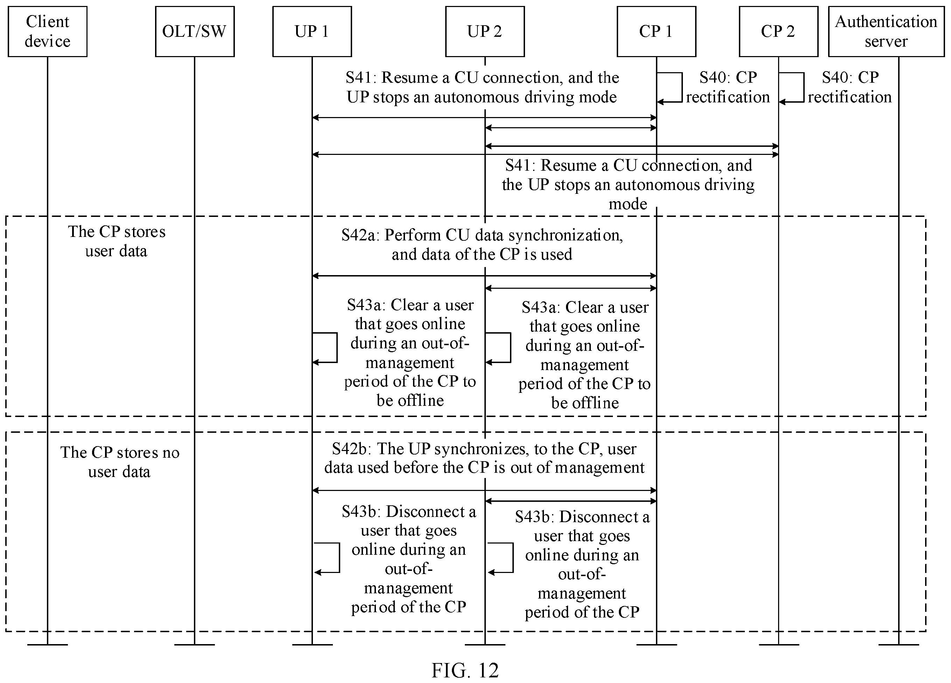

FIG. 12 is a flowchart of a data processing method used after a fault of a CP device is rectified according to an embodiment of this application. As shown in FIG. 12, the method may include the following steps.

Step S40: Rectify faults of a CP 1 and a CP 2.

Step S41: Resume a CU connection, and both a UP 1 and a UP 2 stop an autonomous driving mode.

In this embodiment of this application, if detecting that communication connections to the CPs (including the CP 1 and the CP 2) are resumed, that is, the CU connection is resumed, the UP 1 and the UP 2 may determine that both the faults of the CP 1 and the CP 2 are rectified. Correspondingly, both the UP 1 and the UP 2 may stop the autonomous driving mode.

Step S42a: Perform CU data synchronization, and data of the CP is used.

In a first possible implementation, if user data is stored in the CP 1 after the fault is rectified, the CP 1, as a master CP device, may further synchronize the stored user data (that is, a user entry of a client device) to the UP 1 and the UP 1, to ensure that user data in UP devices is consistent with the user data in the CP 1.

Step S43a: The UP 1 and the UP 2 disconnect a user that goes online during an out-of-management period of the CP.

The client device that goes online during the out-of-management period of the CP may not be authenticated. Therefore, the UP 1 and the UP 2 may periodically (for example, at 03:00 am) disconnect the client device that goes online during the out-of-management period of the CP. For example, the UP 1 and the UP 2 may delete a user entry to which an online flag is added, to clear the client device. Based on this, the client device that goes online during the out-of-management period can go online again after the fault of the CP is rectified. It may be understood that, in addition to being automatically cleared by the UP device, the user who goes online during the out-of-management period may be manually disconnected by operation and maintenance personnel.

Step S42b: The UP synchronizes, to the CP 1, user data used before the CP is out of management.

In a second possible implementation, if no user data is stored in the CP 1 after the fault is rectified, both the UP 1 and the UP 2 may synchronize the user data to the CP 1 (that is, the master CP device). In other words, CU data synchronization is performed between the CP and the UP, and data of the UP is used. Optionally, the UP 1 and the UP 2 may synchronize user data used before the CP is out of management to the CP 1, and user data of a client device that newly goes online during the out-of-management period does not need to be synchronized to the CP 1.

Alternatively, the UP 1 and the UP 2 may synchronize user data of each client device stored in the UP 1 and the UP 2 to the CP 1, so that the CP 1 subsequently processes an offline procedure of the client device.

Step S43b: The UP 1 and the UP 2 disconnect the user that goes online during the out-of-management period of the CP.

It can be learned from the foregoing method procedure that the solution provided in embodiments of this application have at least the following advantages.
1. After a CP device is faulty, a UP device may switch to an autonomous driving mode, and directly perform access of a new user by using configuration information delivered by the CP device and a resource allocated by the CP device, without performing additional service and resource configuration on the UP device. Therefore, reliability of a broadband access system is effectively improved, and a deployment process is simplified.
2. The UP device stores a user entry delivered by the CP device locally or in a database, so that information in the user entry can be used to perform authentication and access of a client device that newly goes online. Therefore, it can be ensured that authentication, authorization, and accounting can be performed on the client device, and non-authentication and non-accounting are avoided.
3. In a scenario in which 1+1 or N+1 backup is configured for the UP device, if the UP device stores no user entry of the client device that newly goes online, the UP device can delay responding to a dial-up request. Therefore, it can be ensured that the UP device storing the user entry can preferentially perform authentication access on the client device, to ensure that authentication, authorization, and accounting can be performed on the client device.
4. When all user entries stored in the CP device are lost, the UP device can reversely synchronize user entries to the CP device, to improve system reliability.
5. After a CU connection is disconnected, the CP device can reserve an address pool resource (an address segment) that is allocated to the UP for a period of time and then allocate the resource to another UP device. This prevents a route conflict on a UP side.

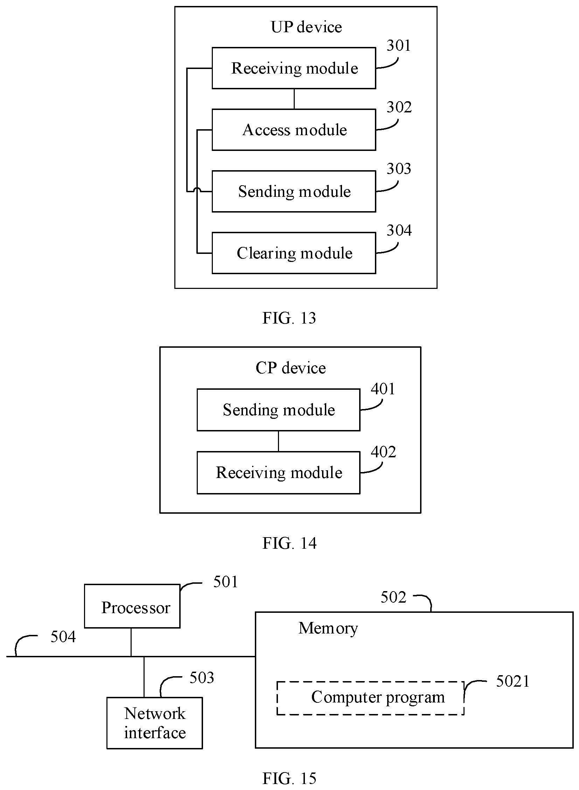

FIG. 13 is a diagram of a structure of a UP device according to an embodiment of this application. The UP device may be applied to the CU-separation broadband access system shown in FIG. 4 or FIG. 5, and may implement the steps performed by the UP device in the foregoing method embodiments. As shown in FIG. 13, the UP device includes:
a receiving module 301, configured to receive an address segment allocated by a CP device to the UP device, and for function implementation of the receiving module 301, refer to related descriptions of step 101 and step 204 in the foregoing method embodiments; and
an access module 302, configured to: after the CP device is faulty, if a dial-up request sent by a target client device is received, allocate a network address to the target client device from the address segment, for the target client device to access a network, and for function implementation of the access module 302, refer to related descriptions of step 102, step 205, and step 206 in the foregoing method embodiments.

Optionally, the access module 302 may be further configured to perform authentication and/or authorization on the target client device based on target domain information corresponding to the target client device. For function implementation of the access module 302, refer to related descriptions of step 207 in the foregoing method embodiments.

Optionally, the dial-up request includes the target domain information.

Optionally, the receiving module 301 may be further configured to receive a user entry of at least one client device that is delivered by the CP device before the CP device is faulty, where a user entry of each client device includes domain information of the client device. For function implementation of the receiving module 301, refer to related descriptions of step 203 in the foregoing method embodiments.

In a possible example, the access module 302 may be configured to: if the target client device belongs to the at least one client device, send a dial-up response to the target client device; and after receiving an access request that is sent by the target client device based on the dial-up response, perform authentication and/or authorization on the target client device based on the target domain information corresponding to the target client device. For function implementation of the access module 302, refer to related descriptions of step 2072a, step 2073a, and step 2074 in the foregoing method embodiments.

In another possible example, the access module 302 may be configured to: if the target client device does not belong to the at least one client device, send a dial-up response to the target client device after a delay of target duration; and after receiving an access request that is sent by the target client device based on the dial-up response, perform authentication and/or authorization on the target client device based on the target domain information corresponding to the target client device. For function implementation of the access module 302, refer to related descriptions of step 2072b, step 2073b, and step 2074 in the foregoing method embodiments.

Optionally, if the target client device belongs to the at least one client device, the target domain information is domain information in a user entry of the target client device. Alternatively, if the target client device does not belong to the at least one client device, the target domain information is default domain information stored in the UP device.

Optionally, the access module 302 may be configured to: obtain authentication information corresponding to the target domain information, and perform authentication and authorization on the target client device by using an authentication device indicated by the authentication information; or perform authorization on the target client device based on authorization information corresponding to the target domain information.

Optionally, the receiving module 301 may be further configured to: before the authentication module 302 performs authentication and/or authorization on the target client device based on the domain information corresponding to the target client device, receive the target domain information delivered by the CP device or statically configured and the authentication information that corresponds to the target domain information and that is used for authentication and authorization; and/or receive the target domain information delivered by the CP device or statically configured and the authorization information that corresponds to the target domain information and that is used for authorization. For function implementation of the receiving module 301, refer to related descriptions of step 201 and step 202 in the foregoing method embodiments.

Optionally, that the access module 302 performs authorization on the target client device may include: configuring a data transmission rate range and/or an access control rule of the target client device.

Optionally, the receiving module 301 may be further configured to: after the fault of the CP device is rectified, receive the user entry of the at least one client device that is delivered by the CP device. For function implementation of the receiving module 301, refer to related descriptions of step 208a in the foregoing method embodiments.

Alternatively, as shown in FIG. 13, the UP device may further include:
a sending module 303, configured to send, to the CP device based on a synchronization indication sent by the CP device, a user entry of at least one client device that is stored in the UP device. For function implementation of the sending module 303, refer to related descriptions of step 208b and step 209b in the foregoing method embodiments.

Optionally, the sending module 303 may be configured to send, to the CP device, a user entry that is stored in the UP device and that is of at least one client device that meets a synchronization condition. The synchronization condition includes: The client device accesses the network before the CP device is faulty, and the client device is still in an online state.

Optionally, the sending module 303 may be further configured to: before the receiving module 301 receives the user entry of the at least one client device that is delivered by the CP device after the fault is rectified, send, to the CP device, a user entry of at least one client device that accesses the network during a fault period of the CP device.

Alternatively, as shown in FIG. 13, the UP device may further include:
a clearing module 304, configured to: if the user entry of the at least one client device that is delivered by the CP device after the fault is rectified includes a user entry of a client device that goes online again, clear the user entry of the client device that goes online again that is delivered by the CP device after the fault is rectified.

The client device that goes online again is a client device that accesses the network before the CP device is faulty and that re-accesses the network via the UP device after the client device goes offline during the fault period of the CP device. For function implementation of the clearing module 304, refer to related descriptions of step 209a in the foregoing method embodiments.

Optionally, the clearing module 304 may be further configured to: after the fault of the CP device is rectified, disconnect the client device that accesses the network during the fault period of the CP device. For function implementation of the clearing module 304, refer to related descriptions of step 210 in the foregoing method embodiments.

Optionally, the broadband access system includes a master CP device and a standby CP device. Correspondingly, the receiving module 301 may be configured to receive an address segment allocated by the master CP device to the UP device.

The authentication module 302 may be configured to: after both the master CP device and the standby CP device are faulty, if the dial-up request sent by the target client device is received, allocate the network address to the target client device from the address segment.

In conclusion, this embodiment of this application provides the UP device. After the CP device is faulty, if receiving the dial-up request sent by the client device, the UP device can access the client device to the network based on the address segment delivered by the CP device before the CP device is faulty. In this way, it is ensured that the client device can still normally access the network after the CP device is faulty.

FIG. 14 is a diagram of a structure of a CP device according to an embodiment of this application. The CP device may be applied to the CU-separation broadband access system shown in FIG. 4 or FIG. 5, and may implement the steps performed by the CP device in the foregoing method embodiments. As shown in FIG. 14, the CP device includes:
a sending module 401, configured to allocate an address segment to a first UP device. After the first UP device detects that the CP device is faulty, if a dial-up request sent by a target client device is received, the address segment is used by the first UP device to allocate a network address to the target client device from the address segment, for the target client device to access a network. For function implementation of the sending module 401, refer to related descriptions of step 101, step 102, and step 204 and step 206 in the foregoing method embodiments.

Optionally, the sending module 401 may be further configured to deliver a user entry of at least one client device to the first UP device, where the user entry of each client device includes domain information of the client device. For function implementation of the sending module 401, refer to related descriptions of step 203 in the foregoing method embodiments.

Optionally, the sending module 401 may be further configured to deliver a correspondence between target domain information and authentication information to the first UP device, where the target domain information corresponds to the target client device; and/or deliver a correspondence between the target domain information and authorization information to the first UP device. The authentication information is used by the first UP device to perform authentication and authorization on the target client device by using an authentication device indicated by the authentication information, and the authorization information is used by the first UP device to perform authorization on the target client device. For function implementation of the sending module 401, refer to related descriptions of step 201 and step 202 in the foregoing method embodiments.

Optionally, the sending module 401 may be further configured to: after a fault of the CP device is rectified, if the CP device stores a user entry of at least one client device, deliver, to the first UP device, the user entry of the at least one client device stored in the CP device. For function implementation of the sending module 401, refer to related descriptions of step 208a in the foregoing method embodiments.

Alternatively, the sending module 401 may be further configured to: after the fault of the CP device is rectified, if the CP device does not store the user entry, send a synchronization indication to the first UP device. In addition, as shown in FIG. 14, the CP device may further include: a receiving module 402, configured to receive a user entry of at least one client device that is sent by the first UP device based on the synchronization indication.

For function implementation of the sending module 401, refer to related descriptions of step 208b in the foregoing method embodiments. For function implementation of the receiving module 402, refer to related descriptions of step 209b in the foregoing method embodiments.

Optionally, the receiving module 402 may be configured to receive a user entry of at least one client device that is sent by the first UP device based on the synchronization indication that meets a synchronization condition. The synchronization condition may include: The client device accesses the network before the CP device is faulty, and the client device is still in an online state.

Optionally, the receiving module 402 may be configured to receive a user entry of at least one client device that goes online before the CP device is faulty and a user entry of at least one client device that goes online during a fault period of the CP device that are sent by the first UP device based on the synchronization indication.

In addition, the receiving module 402 may be further configured to: if a user entry of any client device that goes online during the fault period of the CP device is the same as a user entry of any client device that goes online before the CP device is faulty, delete the user entry of the any client device that goes online before the CP device is faulty, and send a deletion notification to the first UP device. The deletion notification indicates the first UP device to delete the user entry of the any client device that goes online before the CP device is faulty.

Optionally, the receiving module 402 may be further configured to: receive the user entry that is sent by the first UP device and that is of the at least one client device that goes online during the fault period of the CP device, and if detecting that any user entry sent by the first UP device is the same as a user entry of any client device stored in the CP device, delete the user entry of the any client device stored in the CP device.

Correspondingly, the sending module 401 may be configured to send, to the first UP device, a user entry that is currently stored in the CP device and that is of at least one client device that goes online before the CP device is faulty.

Optionally, the sending module 401 may be further configured to: after duration in which a communication connection to the first UP device is disconnected reaches reserved duration, allocate the address segment to a second UP device. For function implementation of the sending module 401, refer to related descriptions of step 211 in the foregoing method embodiments.

Optionally, the CP device may be a master CP device in the broadband access system, and the broadband access system may further include a standby CP device. After the first UP device detects that both the master CP device and the standby CP device are faulty, if the dial-up request sent by the target client device is received, the address segment allocated by the master CP device is used by the first UP device to allocate the network address is allocated to the target client device from the address segment, for the target client device to access the network.

In conclusion, an embodiment of this application provides a CP device, and the CP device can allocate an address segment to a UP device before the CP device is faulty. Therefore, it can be ensured that after the CP device is faulty, if receiving the dial-up request sent by the client device, the UP device can access the client device to the network by using the address segment delivered by the CP device before the CP device is faulty. Based on this, it is ensured that the client device can still normally access the network after the CP device is faulty.

It should be understood that the CP device and the UP device provided in embodiments of this application may be implemented by using an application-specific integrated circuit (application-specific integrated circuit, ASIC) or a programmable logic device (programmable logic device, PLD). The PLD may be a complex program logic device (complex programmable logical device, CPLD), a field programmable gate array (field programmable gate array, FPGA), generic array logic (generic array logic, GAL), or any combination thereof. In addition, the client device access method provided in the foregoing method embodiments may also be implemented by using software. When the client device access method provided in the foregoing method embodiments is implemented by using software, the CP device and the UP device may include software modules configured to implement the foregoing method.

FIG. 15 is a diagram of a structure of a network device according to an embodiment of this application. The network device may be applied to the broadband access system shown in FIG. 4 or FIG. 5, and may be a CP device or a UP device in the system. Refer to FIG. 15. The network device includes a processor 501, a memory 502, a network interface 503, and a bus 504.

The memory 502 stores a computer program 5021, and the computer program 5021 is used to implement various application functions. The processor 501 is configured to execute the computer program 5021 to implement the method that is applied to a CP device or a UP device and that is provided in the foregoing method embodiments. For example, the processor 501 is configured to execute the computer program 5021 to implement functions of the modules in the device shown in FIG. 13 or FIG. 14.

The processor 501 may be a central processing unit (central processing unit, CPU), or the processor 501 may be another general-purpose processor, a digital signal processor (digital signal processor, DSP), an ASIC, an FPGA, or a graphics processing unit (graphics processing unit, GPU), or another programmable logic device, a discrete gate or transistor logic device, a discrete hardware component, or the like. The general-purpose processor may be a microprocessor or any conventional processor.

The memory 502 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

There may be a plurality of network interfaces 503, and the network interface 503 is configured to implement a communication connection (which may be wired or wireless) to another device. In this embodiment of this application, the network interface 503 is configured to receive and send a packet. The another device may be a device like a terminal, a server, or a VM, or another network device.

The bus 504 is configured to connect the processor 501, the memory 502, and the network interface 503. In addition, in addition to a data bus, the bus 504 may further include a power bus, a control bus, a status signal bus, and the like. However, for clarity of description, various buses are marked as the bus 504 in the figure.

If the network device is the UP device, the processor 501 may be configured to: receive, through the network interface 503, an address segment allocated by the CP device to the UP device; and after the CP device is faulty, if a dial-up request sent by a target client device is received through the network interface 503, allocate a network address to the target client device from the address segment, for the target client device to access a network. For a detailed processing process of the processor 501, refer to the steps performed by the UP device in the foregoing method embodiments. Details are not described herein.

If the network device is the CP device, the processor 501 may be configured to allocate an address segment to a UP device through the network interface 503. After the UP device detects that the CP device is faulty, if a dial-up request sent by a target client device is received, the address segment is used by the UP device to allocate a network address to the target client device from the address segment, for the target client device to access a network. For a detailed processing process of the processor 501, refer to the steps performed by the CP device in the foregoing method embodiments. Details are not described herein.

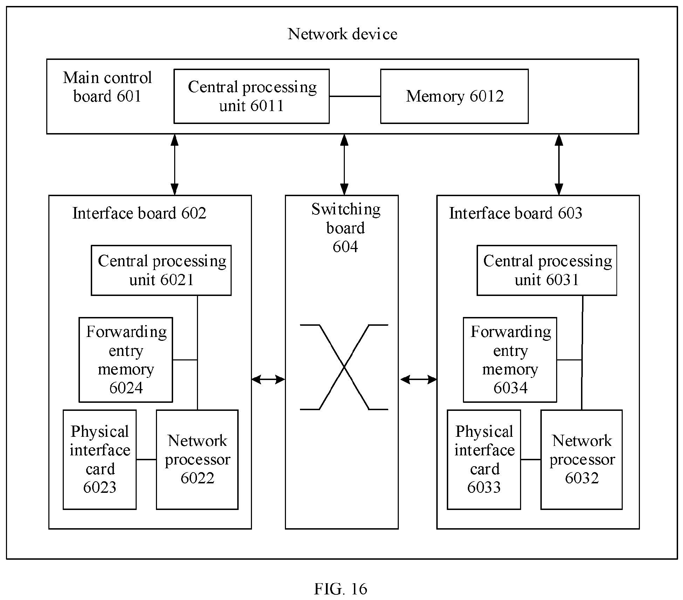

FIG. 16 is a diagram of a structure of another network device according to an embodiment of this application. The network device may be applied to the broadband access system shown in FIG. 4 or FIG. 5, and may be a CP device or a UP device in the system. As shown in FIG. 16, the network device may include a main control board 601 and at least one interface board (the interface board is also referred to as a line card or a service board). For example, FIG. 16 shows an interface board 602 and an interface board 603. In a case of a plurality of interface boards, the network device may further include a switching board 604, and the switching board 604 is configured to complete data exchange between the interface boards.

The main control board 601 is also referred to as a main processing unit (main processing unit, MPU) or a route processing card (route processor card). The main control board 601 is configured to complete functions such as system management, device maintenance, and protocol processing. The main control board 601 mainly has three types of functional units: a system management and control unit, a system clock unit, and a system maintenance unit. The main control board 601 includes a central processing unit 6011 and a memory 6012.

The interface boards 602 and 603 are also referred to as line interface processing units (line interface processing unit, LPU), line cards (line cards), or service boards. The interface boards are configured to provide various service interfaces and implement packet forwarding. A service interface provided by the interface board may include: a packet over SONET/SDH (packet over SONET/SDH, POS) interface, a gigabit Ethernet (gigabit Ethernet, GE) interface, an asynchronous transfer mode (asynchronous transfer mode, ATM) interface, and the like. The SONET refers to a synchronous optical network (synchronous optical network), and the SDH refers to a synchronous digital hierarchy (synchronous digital hierarchy). The main control board 601, the interface board 602, and the interface board 603 are connected to a system backplane through a system bus to implement interworking. As shown in FIG. 16, the interface board 602 includes one or more central processing units 6021. The central processing unit 6021 is configured to control and manage the interface board 602 and communicate with the central processing unit 6011 on the main control board 601. The memory 6024 on the interface board 602 is configured to store a forwarding entry, and a network processor 6022 may forward a packet by searching the forwarding entry stored in the memory 6024. The memory 6024 may be further configured to store program code.

The interface board 602 further includes one or more physical interface cards 6023. The one or more physical interface cards 6023 are configured to receive a packet sent by a previous-hop node, and send a processed packet to a next-hop node based on an indication of the central processing unit 6021.

In addition, it may be understood that the central processing unit 6021 and/or the network processor 6022 in the interface board 602 in FIG. 16 may be dedicated hardware or a chip, for example, an ASIC may be used to implement the foregoing functions, and this implementation is generally referred to as a manner in which a forwarding plane uses dedicated hardware or a chip for processing. In another implementation, the central processing unit 6021 and/or the network processor 6022 may also use a general-purpose processor, for example, a general-purpose CPU, to implement the described functions.

In addition, it should be understood that there may be one or more main control boards 601, and when there are a plurality of main control boards 601, a master main control board and a standby main control board may be included. There may be one or more interface boards. A stronger data processing capability of the network device indicates that more interface boards are provided. As shown in FIG. 16, the network device includes the interface board 602 and the interface board 603. When a distributed forwarding mechanism is used, a structure of the interface board 603 is basically the same as a structure of the interface board 602, and operations on the interface board 603 are basically similar to operations on the interface board 602. For brevity, details are not described. When the network device has a plurality of interface boards, the plurality of interface boards may communicate with each other by using one or more switching network boards 604, and load sharing and redundancy backup may be implemented, to provide a large-capacity data switching and processing capability.

In a centralized forwarding architecture, the network device may not need the switching board 604, and the interface board provides a service data processing function for the entire system. Therefore, a data access and processing capability of a network device in a distributed architecture is greater than that of a network device in a centralized architecture. A specific architecture to be used depends on a specific networking deployment scenario. This is not limited.

In this embodiment of this application, the memory 6012 and the memory 6024 each may be a ROM or another type of static storage device that can store static information and instructions, may be a RAM or another type of dynamic storage device that can store information and instructions, or may be an EEPROM, a compact disc read-only memory (compact disc read-only Memory, CD-ROM) or another optical disc storage, an optical disc storage (including a compact disc, a laser disc, an optical disc, a digital versatile disc, a Blu-ray disc, or the like), a magnetic disk or another magnetic storage device, or any other medium that can be configured to carry or store expected program code in a form of instructions or a data structure and that can be accessed by a computer, but are not limited thereto. The memory 6024 in the interface board 602 may exist independently, and is connected to the central processing unit 6021 through a communication bus; or the memory 6024 may be integrated with the central processing unit 6021. The memory 6012 in the main control board 601 may exist independently, and is connected to the central processing unit 6011 through a communication bus; or the memory 6012 may be integrated with the central processing unit 6011.

The program code stored in the memory 6024 is controlled and executed by the central processing unit 6021, and the program code stored in the memory 6012 is controlled and executed by the central processing unit 6011. The central processing unit 6021 and/or the central processing unit 6011 may implement, by executing program code, the method performed by the CP device or the UP device provided in the foregoing method embodiments. The program code stored in the memory 6024 and/or the memory 6012 may include one or more software units. The one or more software units may be functional modules shown in FIG. 13 or FIG. 14.

In this embodiment of this application, the physical interface card 6023 may be an apparatus using any transceiver, and is configured to communicate with another device or a communication network, for example, the Ethernet, a radio access network (radio access network, RAN), or a wireless local area network (wireless local area network, WLAN).

Optionally, the devices shown in FIG. 13 to FIG. 15 may also be implemented by using the structure shown in FIG. 16.

An embodiment of this application further provides a computer-readable storage medium. The computer-readable storage medium stores instructions. When the instructions are run on a processor, the processor is enabled to perform the steps performed by the CP device or the UP device in the foregoing method embodiments.

An embodiment of this application further provides a computer program product including instructions. When the instructions are run on a processor, the processor is enabled to perform the steps performed by the CP device or the UP device in the foregoing method embodiments.

An embodiment of this application further provides a CU-separation broadband access system. The broadband access system includes a CP device and a UP device. The CP device and the UP device may be configured to implement the client device access method provided in the foregoing method embodiments. In addition, for a structure of the UP device, refer to FIG. 13, FIG. 15, or FIG. 16. For a structure of the CP device, refer to any one of FIG. 14 to FIG. 16.

Optionally, the broadband access system may include a master CP device and a standby CP device. The master CP device may implement the client device access method that is applied to the CP device and that is provided in the foregoing method embodiments.

Optionally, the broadband access system may include a plurality of UP devices, and all the plurality of UP devices may implement the client device access method that is applied to the UP device and that is provided in the foregoing method embodiments. Alternatively, a master UP device in the plurality of UP devices may implement the client device access method that is applied to the UP device and that is provided in the foregoing method embodiments.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance. The term "at least one" means one or more, and "a plurality of" means two or more. The term "and/or" in this application describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A client device access method, applied to a UP device in a control plane CP-user plane UP separation broadband access system, wherein the method comprises:
receiving an address segment allocated by a control plane CP device to the UP device; and
after the CP device is faulty, if a dial-up request sent by a target client device is received, allocating a network address to the target client device from the address segment, for the target client device to access a network.

2. The method according to claim 1, wherein the method further comprises:
performing authentication and/or authorization on the target client device based on target domain information corresponding to the target client device.

3. The method according to claim 2, wherein the dial-up request comprises the target domain information.

4. The method according to any one of claims 1 to 3, wherein the method further comprises:
receiving a user entry of at least one client device delivered by the CP device before the CP device is faulty, wherein a user entry of each client device comprises domain information of the client device.

5. The method according to claim 4, wherein the performing authentication and/or authorization on the target client device based on target domain information corresponding to the target client device comprises:
if the target client device belongs to the at least one client device, sending a dial-up response to the target client device; and
after receiving an access request that is sent by the target client device based on the dial-up response, performing authentication and/or authorization on the target client device based on the target domain information corresponding to the target client device.

6. The method according to claim 4, wherein the performing authentication and/or authorization on the target client device based on target domain information corresponding to the target client device comprises:
if the target client device does not belong to the at least one client device, sending a dial-up response to the target client device after a delay of target duration; and
after receiving an access request that is sent by the target client device based on the dial-up response, performing authentication and/or authorization on the target client device based on the target domain information corresponding to the target client device.

7. The method according to any one of claims 4 to 6, wherein if the target client device belongs to the at least one client device, the target domain information is domain information in a user entry of the target client device; or
if the target client device does not belong to the at least one client device, the target domain information is default domain information stored in the UP device.

8. The method according to any one of claims 2 to 7, wherein the performing authentication and/or authorization on the target client device based on target domain information corresponding to the target client device comprises:
obtaining authentication information corresponding to the target domain information, and performing authentication and authorization on the target client device by using an authentication device indicated by the authentication information; or
performing authorization on the target client device based on authorization information corresponding to the target domain information.

9. The method according to any one of claims 2 to 8, wherein before the performing authentication and/or authorization on the target client device based on domain information corresponding to the target client device, the method further comprises:
receiving the target domain information delivered by the CP device or statically configured and the authentication information that corresponds to the target domain information and that is used for authentication and authorization; and/or
receiving the target domain information delivered by the CP device or statically configured and the authorization information that corresponds to the target domain information and that is used for authorization.

10. The method according to any one of claims 2 to 9, wherein the performing authorization on the target client device comprises:
configuring a data transmission rate range and/or an access control rule of the target client device.

11. The method according to any one of claims 1 to 10, wherein the method further comprises:
after a fault of the CP device is rectified, receiving the user entry of the at least one client device that is delivered by the CP device; or
sending, to the CP device based on a synchronization indication sent by the CP device, a user entry of at least one client device that is stored in the UP device .

12. The method according to claim 11, wherein the sending, to the CP device, a user entry of at least one client device that is stored in the UP device comprises:
sending, to the CP device, a user entry that is stored in the UP device and that is of at least one client device that meets a synchronization condition, wherein
the synchronization condition comprises: the client device accesses the network before the CP device is faulty, and the client device is still in an online state.

13. The method according to claim 11, wherein the method further comprises:
before receiving the user entry of the at least one client device that is delivered by the CP device after the fault is rectified, sending, to the CP device, a user entry of at least one client device that accesses the network during a fault period of the CP device; or
if the user entry of the at least one client device that is delivered by the CP device after the fault is rectified comprises a user entry of a client device that goes online again, clearing the user entry of the client device that goes online again that is delivered by the CP device after the fault is rectified, wherein
the client device that goes online again is a client device that accesses the network before the CP device is faulty and that re-accesses the network via the UP device after the client device goes offline during the fault period of the CP device.

14. The method according to any one of claims 1 to 13, wherein the method further comprises:
after the fault of the CP device is rectified, disconnecting the client device that accesses the network during the fault period of the CP device.

15. The method according to any one of claims 1 to 14, wherein the broadband access system comprises a master CP device and a standby CP device, and
the receiving an address segment allocated by a control plane CP device to the UP device comprises: receiving an address segment allocated by the master CP device to the UP device; and
after the CP device is faulty, if the dial-up request sent by the target client device is received, the allocating a network address to the target client device from the address segment comprises:
after both the master CP device and the standby CP device are faulty, if the dial-up request sent by the target client device is received, allocating the network address to the target client device from the address segment.

16. A client device access method, applied to a CP device in a control plane CP-user plane UP separation broadband access system, wherein the method comprises:
allocating an address segment to a first UP device, wherein
after the first UP device detects that the CP device is faulty, if a dial-up request sent by a target client device is received, the address segment is used by the first UP device to allocate a network address to the target client device from the address segment, for the target client device to access a network.

17. The method according to claim 16, wherein the method further comprises:
delivering a user entry of at least one client device to the first UP device, wherein a user entry of each client device comprises domain information of the client device.

18. The method according to claim 16 or 17, wherein the method further comprises:
delivering a correspondence between target domain information and authentication information to the first UP device, wherein the target domain information corresponds to the target client device; and/or
delivering a correspondence between the target domain information and authorization information to the first UP device, wherein
the authentication information is used by the first UP device to perform authentication and authorization on the target client device by using an authentication device indicated by the authentication information, and the authorization information is used by the first UP device to perform authorization on the target client device.

19. The method according to any one of claims 16 to 18, wherein after a fault of the CP device is rectified, the method further comprises:
if the CP device stores a user entry of at least one client device, delivering, to the first UP device, the user entry of the at least one client device stored in the CP device, or
if the CP device stores no user entry, sending a synchronization indication to the first UP device, and receiving a user entry of at least one client device that is sent by the first UP device based on the synchronization indication.

20. The method according to claim 19, wherein the receiving a user entry of at least one client device that is sent by the first UP device based on the synchronization indication comprises:
receiving a user entry of at least one client device that is sent by the first UP device based on the synchronization indication that meets a synchronization condition, wherein
the synchronization condition comprises: the client device accesses the network before the CP device is faulty, and the client device is still in an online state.

21. The method according to claim 19, wherein the receiving a user entry of at least one client device that is sent by the first UP device based on the synchronization indication comprises:
receiving a user entry of at least one client device that goes online before the CP device is faulty and a user entry of at least one client device that goes online during a fault period of the CP device that are sent by the first UP device based on the synchronization indication, and
the method further comprises:
if a user entry of any client device that goes online during the fault period of the CP device is the same as a user entry of any client device that goes online before the CP device is faulty, deleting the user entry of the any client device that goes online before the CP device is faulty, and sending a deletion notification to the first UP device, wherein the deletion notification indicates the first UP device to delete the user entry of the any client device that goes online before the CP device is faulty.

22. The method according to claim 19, wherein if the CP device stores the user entry of the at least one client device, the delivering, to the first UP device, the user entry of the at least one client device stored in the CP device comprises:
receiving a user entry that is sent by the first UP device and that is of at least one client device that goes online during a fault period of the CP device;
if any user entry sent by the first UP device is the same as a user entry of any client device stored in the CP device, deleting the user entry of the any client device stored in the CP device; and
sending, to the first UP device, a user entry that is stored in the CP device and that is of at least one client device that goes online before the CP device is faulty.

23. The method according to any one of claims 16 to 22, wherein the method further comprises:
after duration in which a communication connection to the first UP device is disconnected reaches reserved duration, allocating the address segment to a second UP device.

24. The method according to any one of claims 16 to 23, wherein the CP device is a master CP device in the broadband access system, the broadband access system further comprises a standby CP device, and after the first UP device detects that both the master CP device and the standby CP device are faulty, if the dial-up request sent by the target client device is received, the address segment is used by the first UP device to allocate the network address to the target client device from the address segment, for the target client device to access the network.

25. A client device access method, applied to a control plane CP-user plane UP separation broadband access system, wherein the system comprises a CP device and a first UP device, and the method comprises:
allocating, by the CP device, an address segment to the first UP device; and
after the CP device is faulty, if a dial-up request sent by a target client device is received, allocating, by the first UP device, a network address to the target client device from the address segment, for the target client device to access a network.

26. The method according to claim 25, wherein the method further comprises:
performing, by the first UP device, authentication and/or authorization on the target client device based on target domain information corresponding to the target client device.

27. The method according to claim 26, wherein the method further comprises:
delivering, by the CP device, a user entry of at least one client device to the first UP device before the CP device is faulty, wherein a user entry of each client device comprises domain information of the client device.

28. The method according to claim 26 or 27, wherein the method further comprises:
delivering, by the CP device to the first UP device, the target domain information and authentication information that corresponds to the target domain information and that is used for authentication and authorization, and/or the target domain information and authorization information that corresponds to the target domain information and that is used for authorization.

29. The method according to any one of claims 25 to 28, wherein after a fault of the CP device is rectified, the method further comprises:
if the CP device stores a user entry of at least one client device, delivering, by the CP device to the first UP device, the user entry of the at least one client device stored in the CP device; or
if the CP device stores no user entry, sending, by the CP device, a synchronization indication to the first UP device, and sending, by the first UP device, a user entry of at least one client device to the CP device based on the synchronization indication.

30. The method according to any one of claims 25 to 29, wherein the system further comprises a second UP device, and the method further comprises:
after duration in which a communication connection to the first UP device is disconnected reaches reserved duration, allocating, by the CP device, the address segment to the second UP device.

31. The method according to any one of claims 25 to 30, wherein the system comprises a master CP device and a standby CP device, and
the allocating, by the CP device, an address segment to the first UP device comprises: allocating, by the master CP device, the address segment to the first UP device; and
after the CP device is faulty, if the dial-up request sent by the target client device is received, the allocating, by the first UP device, a network address to the target client device from the address segment comprises:
after both the master CP device and the standby CP device are faulty, if the dial-up request sent by the target client device is received, allocating, by the first UP device, the network address to the target client device from the address segment.

32. A network device, wherein the network device comprises a memory, a processor, and a computer program that is stored in the memory and that can be run on the processor, and when executing the computer program, the processor implements the method according to any one of claims 1 to 24.

33. A computer-readable storage medium, wherein the computer-readable storage medium stores instructions, and when the instructions are run on a processor, the processor is enabled to perform the method according to any one of claims 1 to 24.

34. A computer program product comprising instructions, wherein the instructions are executed by a processor, to implement the method according to any one of claims 1 to 24.

35. A broadband access system, wherein the system comprises a user plane UP device and a control plane CP device; and
the UP device is configured to implement the method according to any one of claims 1 to 15, and the CP device is configured to implement the method according to any one of claims 16 to 24.
